# EUROPÄISCHE PATENTSCHRIFT

(11) **EP 4 669 552 B1**
(45) Veröffentlichungstag und Bekanntmachung des Hinweises auf die Patenterteilung: **26.08.2026**
(21) Anmeldenummer: 24704435.7
(22) Anmeldetag: 12.02.2024
(51) Int. Cl.: B60T 13/68, B60T 17/18, B60T 8/172

(54) **DRUCKMITTELBETÄTIGTE BREMSVORRICHTUNG MIT ERWEITERTEN FUNKTIONEN**
PRESSURE MEDIUM-ACTUATED BRAKE DEVICE WITH ENHANCED FUNCTIONS
DISPOSITIF DE FREINAGE ACTIONNÉ PAR UN FLUIDE SOUS PRESSION ET AYANT DES FONCTIONS AMÉLIORÉES

(30) Priorität: 23.02.2023 DE 102023104476
(43) Veröffentlichungstag der Anmeldung: 31.12.2025
(73) Patentinhaber: KNORR-BREMSE Systeme für Nutzfahrzeuge GmbH, 80809 München (DE)
(72) Erfinder: GEIS-ESSER, Daniel, 81377 München (DE); JUNDT, Oliver, 74394 Hessigheim (DE); RÖTHER, Friedbert, 74389 Cleebronn (DE)
(86) Internationale Anmeldenummer: PCT/EP2024/053420
(87) Internationale Veröffentlichungsnummer: WO 2024/175387

(56) Entgegenhaltungen:
- EP-A1- 3 421 309
- EP-A1- 3 626 562
- CN-A- 111 634 276
- DE-B3- 102005 062 907

## Beschreibung

Die Erfindung betrifft eine druckmittelbetätigte und zumindest teilweise elektronische Bremsvorrichtung für ein Fahrzeug, insbesondere für ein Nutzfahrzeug gemäß dem Oberbegriff von Anspruch 1. Die Erfindung betrifft auch ein Fahrzeug mit einer solchen Bremsvorrichtung nach Anspruch 19.

Eine druckmittelbetätigte und zumindest teilweise elektronische Bremsvorrichtung ist aus DE 10 2005 062 907 B3 bekannt. Dort wird ein druckmittelbetätigtes Bremssystem offenbart, welches mindestens einen ersten Bremssteuerkreis und einen zweiten Bremssteuerkreis umfasst sowie mindestens zwei Bremskrafterzeugungseinrichtungen umfasst, von welchen jede von einem eigenen Bremsaktuator mit Druckmittel versorgt wird. Wenn ein Bremssteuerkreis oder ein Bremsaktuator eines Bremssteuerkreises einen elektrischen Fehler aufweist, kann das Steuergerät des verbleibenden funktionsfähigen Bremssteuerkreises die noch funktionsfähigen Bremsaktuatoren des ausgefallenen Steuerkreises mit seinem Bremsdruck als Steuerdruck ansteuern. Eine gattungsgemäß Bremsvorrichtung wird in EP 3 626 562 A1 beschrieben.

Der vorliegenden Erfindung liegt die Aufgabe zugrunde, eine Bremsvorrichtung mit einer erhöhten Redundanz und funktionalen Sicherheit zur Verfügung zu stellen. Ebenso soll ein Fahrzeug mit einer solchen Bremsvorrichtung zur Verfügung gestellt werden.

Diese Aufgabe wird erfindungsgemäß durch die Merkmale der Ansprüche 1 und 19 gelöst.

### Offenbarung der Erfindung

Die Erfindung stellt eine druckmittelbetätigte und zumindest teilweise elektronische Bremsvorrichtung für ein Fahrzeug, insbesondere für ein Nutzfahrzeug zur Verfügung, wenigstens umfassend:
a) Einen ersten Bremskreis mit einer ersten elektronischen Steuerung, wenigstens einem ersten elektro-pneumatischen Druckmodulator und wenigstens einem ersten Bremsaktuator, der ein erstes Rad abbremst, wobei der wenigstens eine erste Druckmodulator primär von der ersten elektronischen Steuerung elektrisch und sekundär durch einen ersten Steuerdruck insbesondere pneumatisch steuerbar ist, um in wenigstens einer ersten Bremsleitung einen ersten Bremsdruck für den wenigstens einen ersten Bremsaktuator zu erzeugen,
b) einen zweiten Bremskreis mit einer zweiten elektronischen Steuerung, wenigstens einem zweiten Druckmodulator und wenigstens einem zweiten Bremsaktuator, der ein erstes Rad abbremst, wobei der wenigstens eine zweite Druckmodulator primär von der zweiten elektronischen Steuerung elektrisch und sekundär durch einen zweiten Steuerdruck insbesondere pneumatisch steuerbar ist, um in wenigstens einer zweiten Bremsleitung einen zweiten Bremsdruck für den wenigstens einen zweiten Bremsaktuator zu erzeugen,
c) wenigstens ein erstes Drucksteuerventil in der ersten Bremsleitung, welches ausgebildet ist, um abhängig von einem ersten elektrischen Signal den ersten Bremsdruck zu modulieren, wobei
d) wenigstens ein zweites Drucksteuerventil in der zweiten Bremsleitung vorgesehen ist, welches ausgebildet ist, um abhängig von einem zweiten elektrischen Signal den zweiten Bremsdruck zu modulieren der erste Steuerdruck mit dem zweiten Bremsdruck zumindest korreliert, wobei
e) der erste Steuerdruck mit dem zweiten Bremsdruck zumindest korreliert, und/oder wobei
f) der zweite Steuerdruck mit dem ersten Bremsdruck zumindest korreliert, und wobei
g) das erste elektrische Signal und/oder das zweite elektrische Signal durch wenigstens eine in wenigstens einer elektronischen Steuerung implementierten Funktion erzeugt wird.

Dass der erste Steuerdruck mit dem zweiten Bremsdruck zumindest korreliert kann bedeuten, dass der erste Steuerdruck in seiner Höhe im Wesentlichen dem zweiten Bremsdruck entspricht oder von diesem in irgendeiner Weise abgeleitet ist, beispielsweise durch Druckmengenverstärkung mittels eines Relaisventils. Dass der zweite Steuerdruck mit dem ersten Bremsdruck zumindest korreliert kann bedeutet, dass der zweite Steuerdruck in seiner Höhe im Wesentlichen dem ersten Bremsdruck entspricht oder von diesem in irgendeiner Weise abgeleitet ist, beispielsweise durch Druckmengenverstärkung mittels eines Relaisventils.

Mit anderen Worten bildet dann ein (modulierter) Bremsdruck eines Bremskreises eine Basis für einen Steuerdruck, der dann für die sekundäre Steuerung des anderen Bremskreises verwendet wird, falls beispielsweise die elektrische Steuerung dieses anderen Bremskreises ausgefallen ist. Dadurch wird eine vorteilhafte Redundanz geschaffen.

Die Bremsvorrichtung ist insbesondere eine elektro-pneumatische Betriebsbremsvorrichtung und umfasst vorzugsweise die Komponenten eines EBS. Der erste Bremskreis und der zweite Bremskreis können insbesondere Achsbremskreise sein, d.h. sie steuern jeweils die Radbremsen wenigstens einer Achse.

Das erste Drucksteuerventil und/oder das zweite Drucksteuerventil kann (können) insbesondere als ABS-Drucksteuerventil(e) ausgebildet sein, die zum sukzessiven Halten, Steigern und Senken des Bremsdrucks vorgesehen sind. Auch kann (können) das erste elektrische Signal und/oder das zweite elektrische Signal insbesondere pulsweitenmodulierte(s) Signal(e) sein. Nicht zuletzt kann das erste elektrische Signal ein originäres erstes elektrisches Signal und das zweite elektrische Signal ein originäres zweites elektrisches Signal sein, das jeweils innerhalb des zugeordneten ersten oder zweiten Bremskreises erzeugt worden ist, oder aber auch ein erstes elektrisches Ersatz-Signal für das erste elektrische Signal und ein zweites elektrisches Ersatz-Signal für das zweite elektrische Signal, welche dann von der elektronischen Steuerung des jeweils anderen Bremskreises insbesondere lediglich für den Backup-Fall erzeugt worden sind.

Mit dem ersten Drucksteuerventil wird die Möglichkeit geschaffen, den durch den ersten Druckmodulator abhängig von dem mit dem zweiten Bremsdruck zumindest korrelierenden ersten Steuerdruck erzeugten ersten Bremsdruck zu modulieren. In analoger Weise ermöglicht das zweite Drucksteuerventil, den durch den zweiten Druckmodulator abhängig von dem mit dem ersten Bremsdruck zumindest korrelierenden zweiten Steuerdruck erzeugten ersten Bremsdruck zu modulieren. Diese Modulation des Bremsdrucks in einem Bremskreis, in welchem die primäre elektrische Steuerung ausgefallen ist, ermöglicht dann eine Erweiterung der Bremsvorrichtung durch wenigstens eine Funktion.

Beispielsweise kann die Funktion ausgebildet und eingerichtet sein, um den ersten Bremsdruck und/oder den zweiten Bremsdruck zu steuern oder zu regeln. Mit anderen Worten kann dann der Bremsdruck an einer Achse oder an einem Rad mit Hilfe des betreffenden Drucksteuerventils individuell moduliert werden, obwohl die primäre elektrische Steuerung des Bremskreises ausgefallen ist, welchem der Bremsaktuator oder die Bremsaktuatoren der Achse oder des Rades zugeordnet ist (sind). Die Aussteuerung des ersten Signals und/oder des zweiten Signals zur Steuerung des betreffenden Drucksteuerventils erfolgt dann durch eine in einer (intakten) elektronischen Steuerung implementierten Funktion. Insbesondere kann diese Funktion eine achslastabhängige Bremsdrucksteuerung, eine Antiblockierfunktion (ABS), eine Antriebsschlupfregelung (ASR) und/oder eine Fahrdynamikregelung (ESP) eine Verarbeitung oder Umsetzung eines eine Soll-Verzögerung repräsentierenden (Bremsanforderungs-)Signals und/oder eine Fahrassistenzfunktion wie ACC, Notbremsassistent usw. umfassen, wobei diese Aufzählung nicht abschließend ist.

Insbesondere hierzu kann die wenigstens eine Funktion sowohl in der ersten elektronische Steuerung als auch in der zweiten elektronischen Steuerung implementiert sein. Durch diese Maßnahme ergeben sich weitere Steuerungs- und Regelungsmöglichkeiten der Bremsvorrichtung insbesondere im Backup-Fall, weil dann die ersten und zweiten Drucksteuerventile auch bei einem Fehler oder Ausfall einer der beiden elektronischen Steuerungen noch von der jeweils intakten elektronischen Steuerung durch die ersten und zweiten Signale angesteuert werden können, insbesondere durch die dort jeweils implementierte wenigstens eine Funktion.

Insbesondere kann daher die Funktion in der ersten elektronischen Steuerung und/oder in der zweiten elektronischen Steuerung oder in einer dritten Steuerung implementiert sein. Vorteilhaft ist diese wenigstens eine Funktion in der ersten elektronischen Steuerung und in der zweiten elektronischen Steuerung implementiert, so dass bei einem Ausfall einer der elektronischen Steuerungen die jeweils intakt verbliebene elektronische Steuerung den Bremsdruck des jeweils elektrisch ausgefallenen Bremskreises mit Hilfe des oder der betreffenden Drucksteuerventile im Sinne der wenigstens einen Funktion modulieren kann.

Besonders bevorzugt ist das wenigstens eine erste Drucksteuerventil durch ein von der ersten elektronischen Steuerung erzeugtes erstes Signal und durch ein von der zweiten elektronische Steuerung erzeugtes erstes Signal steuer- oder regelbar. Dabei kann jeweils ein erstes Signal von der ersten elektronische Steuerung und von der zweiten elektronische Steuerung parallel erzeugt werden. Denkbar ist dabei auch eine Rückhaltung eines der beiden erzeugten ersten Signale abhängig von der Funktionstüchtigkeit der beiden Bremskreise.

Insbesondere kann das erste Signal abhängig von der Funktionstüchtigkeit der beiden Bremskreise entweder von der ersten elektronischen Steuerung oder von der zweiten elektronische Steuerung in das erste Drucksteuerventil eingesteuert werden.

Dies kann bedeuten, dass das wenigstens eine erste Drucksteuerventil im Normalfall, d.h. bei intakter primärer elektrischer Steuerung des ersten Druckmodulators bzw. des ersten Bremskreises (insbesondere ausschließlich) durch ein von der ersten elektronischen Steuerung erzeugtes erstes Signal und (bevorzugt lediglich) im Backup-Fall durch ein von der zweiten elektronische Steuerung erzeugtes erstes Signal steuer- oder regelbar ist.

Weiterhin bevorzugt kann das wenigstens eine zweite Drucksteuerventil durch ein von der ersten elektronischen Steuerung erzeugtes zweites Signal und durch ein von der zweiten elektronische Steuerung erzeugtes zweites Signal steuer- oder regelbar sein.

Dabei kann jeweils ein zweites Signal von der ersten elektronische Steuerung und von der zweiten elektronische Steuerung parallel erzeugt werden. Denkbar ist dabei auch eine Rückhaltung eines der beiden erzeugten zweiten Signale abhängig von der Funktionstüchtigkeit der beiden Bremskreise.

Insbesondere kann das zweite Signal abhängig von der Funktionstüchtigkeit der beiden Bremskreise entweder von der ersten elektronischen Steuerung oder von der zweiten elektronische Steuerung in das zweite Drucksteuerventil eingesteuert werden.

Dies kann bedeuten, dass das wenigstens eine zweite Drucksteuerventil im Normalfall, d.h. bei intakter primärer elektrischer Steuerung des zweiten Druckmodulators bzw. des zweiten Bremskreises (insbesondere ausschließlich) durch ein von der zweiten elektronischen Steuerung erzeugtes zweites Signal steuer- oder regelbar ist und (bevorzugt lediglich) im Backup-Fall durch ein von der ersten elektronische Steuerung erzeugtes zweites Signal steuer- oder regelbar ist.

Um daher eine Konkurrenz bzw. eine Kollision zwischen zwei von den beiden elektronischen Steuerungen parallel ausgegebenen (ersten oder zweiten) Steuersignalen für das wenigstens eine (erste oder zweite) Drucksteuerventil eines Bremskreises zu vermeiden, sind die ersten und zweiten elektronischen Steuerungen bevorzugt ausgebildet, dass (insbesondere lediglich) im Normalfall, d.h. bei intakter primärer elektrischer Steuerung des (ersten oder zweiten) Bremskreises das (erste oder zweite) Steuersignal der diesem (ersten oder zweiten) Bremskreis zugeordneten (ersten oder zweiten) elektronischen Steuerung wirksam ist oder gesetzt wird, während das (erste oder zweite) Steuersignal von der dem jeweils anderen (ersten oder zweiten) Bremskreis zugeordneten elektronischen Steuerung nicht erzeugt oder das erzeugte (erste oder zweite) Signal unterdrückt wird.

Für den Backup-Fall, d.h. bei einem festgestellten Ausfall oder Fehler in einer primären elektrischen Steuerung des ersten oder zweiten Bremskreises sind die ersten und zweiten elektronischen Steuerungen bevorzugt ausgebildet, dass (insbesondere erst dann) das (erste oder zweite) Steuersignal von der dem jeweils anderen Bremskreis zugeordneten (ersten oder zweiten) elektronischen Steuerung erzeugt oder wirksam gesetzt wird.

Auch kann ein Master-Slave-Verhältnis zwischen der ersten elektronischen Steuerung und der zweiten elektronischen Steuerung in Bezug auf die Erzeugung des ersten Signals und/oder des zweiten Signals insbesondere bei einem Einschalten der Zündung des Fahrzeugs festgelegt sein oder werden. In diesem Master-Slave-Verhältnis ist dann geregelt, welche der beiden elektronischen Steuerungen das erste Signal und/oder das zweite Signal erzeugt oder nicht erzeugt.

Das wenigstens eine erste Drucksteuerventil wird bevorzugt dem ersten Bremskreis zugeordnet, weil es den ersten Bremsdruck moduliert, obwohl es beispielsweise von der zweiten elektronischen Steuerung des zweiten Bremskreises durch das zweite Signal angesteuert werden kann. Gleichermaßen wird das wenigstens eine zweite Drucksteuerventil bevorzugt dem zweiten Bremskreis zugeordnet, weil es den zweiten Bremsdruck moduliert, obwohl es beispielsweise von der ersten elektronischen Steuerung des ersten Bremskreises durch das erste Signal angesteuert werden kann.

Im Backup-Fall, d.h. wenn bei einem Bremskreis die primäre elektrische Steuerung ausgefallen ist, erfolgt daher die Ansteuerung des wenigstens einen Drucksteuerventils beispielsweise durch die jeweils intakt verbliebene (erste oder zweite) elektronische Steuerung des anderen Bremskreises.

Im Normalfall, d.h. bei intakter primärer elektrischer Steuerung beider Bremskreise wird das wenigstens eine erste Drucksteuerventil bevorzugt von der ersten elektronischen Steuerung des ersten Bremskreises durch das erste Signal angesteuert, um den ersten Bremsdruck zu modulieren, und das wenigstens eine zweite Drucksteuerventil von der zweiten elektronischen Steuerung des zweiten Bremskreises durch das zweite Signal, um den zweiten Bremsdruck zu modulieren. Wenn daher bei einer Bremsvorrichtung bereits Drucksteuerventile in den Bremsleitungen zwischen den Druckmodulatoren und den Bremsaktuatoren vorhanden sind, können diese für die Realisierung der Erfindung vorteilhaft herangezogen werden.

Gemäß einer Weiterbildung kann bei der Bremsvorrichtung
a) wenigstens ein erster Raddrehzahlsensor vorgesehen und ausgebildet sein, um eine erste Raddrehzahl eines von dem ersten Bremsaktuator gebremsten ersten Rads zu erfassen, und/oder
b) wenigstens ein zweiter Raddrehzahlsensor vorgesehen und ausgebildet sein, um eine zweite Raddrehzahl eines von dem zweiten Bremsaktuator gebremsten zweiten Rads zu erfassen.

Dann kann die Funktion bevorzugt ausgebildet und eingerichtet sein, dass sie
a) das erste elektrische Signal abhängig von der erfassten ersten Raddrehzahl und/oder abhängig von der erfassten zweiten Raddrehzahl erzeugt, und/oder
b) das zweite elektrische Signal abhängig von der erfassten ersten Raddrehzahl und/oder abhängig von der erfassten zweiten Raddrehzahl erzeugt.

Wenn beispielsweise die Funktion eine Antiblockierfunktion (ABS), eine Antriebsschlupfregelung (ASR) und/oder eine Fahrdynamikregelung (ESP) und/oder eine Fahrassistenzfunktion umfasst, so ist für eine Ausführung einer solchen Funktion mit Hilfe des ersten Drucksteuerventils und/oder mit Hilfe des zweiten Drucksteuerventils ein Erfassen der ersten und/oder zweiten Raddrehzahl notwendig. Gemäß einer besonders zu bevorzugenden Ausführung kann vorgesehen sein, dass
a) der wenigstens eine erste Raddrehzahlsensor abhängig von der ersten Raddrehzahl ein erstes Raddrehzahlsignal erzeugt und in die zweite elektronische Steuerung einsteuert, und/oder dass
b) der wenigstens eine zweite Raddrehzahlsensor abhängig von der zweiten Raddrehzahl ein zweites Raddrehzahlsignal erzeugt und in die erste elektronische Steuerung einsteuert.

Auch kann dann vorgesehen sein, dass
a) die zweite elektronische Steuerung das erste Signal abhängig von dem ersten Raddrehzahlsignal erzeugt, und/oder dass
b) die erste elektronische Steuerung das zweite Signal abhängig von dem zweiten Raddrehzahlsignal erzeugt.

Mit anderen Worten erfolgt beispielsweise die Raddrehzahlerfassung durch den ersten und zweiten Raddrehzahlsensor und auch die Ansteuerung des ersten und zweiten Drucksteuerventils in Bezug auf den ersten und zweiten Bremskreis in vertauschter Weise. Somit kann im Back-up Fall, d.h. bei in einem Bremskreis ausgefallener primärer elektrischer Steuerung die elektronische Steuerung des noch elektrisch noch funktionsfähigen Bremskreises den Bremsdruck in dem elektrisch ausgefallenen Bremskreis trotzdem noch beispielsweise radindividuell abhängig von der Raddrehzahl der Räder des elektrisch ausgefallenen Bremskreises einstellen, um an diesen Rädern beispielsweise eine raddrehzahlabhängige Funktion wie ABS, ASR und/oder ESP auszuführen.

Insbesondere kann die erste elektronische Steuerung den wenigstens einen ersten Druckmodulator und/oder die zweite elektronische Steuerung den wenigstens einen zweiten Druckmodulator abhängig von einem eine Soll-Verzögerung repräsentierenden Signal elektrisch steuern, das von einem durch einen Fahrer des Fahrzeugs betätigbaren Bremswertgeber, einem Autopiloten, oder von einem Fahrerassistenzsystem erzeugt worden ist oder wird.

Besonders bevorzugt kann
a) der erste Druckmodulator als ein- oder mehrkanaliges Druckregelmodul ausgebildet sein, welches den ersten Bremsdruck auf einen ersten Soll-Bremsdruck regelt, der abhängig von der Soll-Verzögerung ist, und/oder
b) der zweite Druckmodulator als ein- oder mehrkanaliges Druckregelmodul ausgebildet sein, welches den zweiten Bremsdruck (p2) auf einen zweiten Soll-Bremsdruck regelt, der abhängig von der Soll-Verzögerung ist.

Ein solches Druckregelmodul ist an sich hinlänglich bekannt und umfasst eine integrierte elektronische Steuerung, die eine integrierte Einlass-Auslassventilkombination ansteuert, um einen Steuerdruck für ein ebenfalls integriertes Relaisventil zu erzeugen, dass daraufhin einen von einem angeschlossenen Druckluftvorrat gespeisten Vorratsdruck abgeleiteten Bremsdruck in die angeschlossene(n) Bremsleitung(en) einsteuert. Durch einen integrierten Drucksensor wird der Bremsdruck gemessen und an die integrierte elektronische Steuerung gemeldet, welche daraufhin die Einlass-Auslass-Magnetventilkombination ansteuert, um eine etwaige Abweichung zu einem Soll-Bremsdruck abzugleichen, welcher der integrierten elektronischen Steuerung von extern abhängig von der Soll-Verzögerung (zsoll) durch ein elektrisches Signal vorgegeben wird. Als Kompensation für einen Ausfall der primären elektrischen Steuerung ist eine sekundäre pneumatische Steuerung des Druckregelmoduls vorgesehen, indem dann ein integriertes Backup-Magnetventil, das bis dahin den pneumatischen Steuerdruck für das integrierte Relaisventil durch Einnehmen seiner Sperrstellung zurückgehalten hat, durch Entstromen automatisch in seine Durchgangsstellung schaltet, woraufhin der pneumatische Steuerdruck am Relaisventil wirksam werden kann, um den Bremsdruck abhängig von dem Steuerdruck zu erzeugen. Bei einem mehrkanaligen Druckregelmodul sind dann die oben erwähnten Komponenten je Kanal vorhanden und beispielsweise in einem gemeinsamen Gehäuse zusammengefasst.

Bei der Erfindung wird dieser Steuerdruck für das Relaisventil, d.h. für die sekundäre Steuerung des Druckregelmoduls dann durch den Bremsdruck des jeweils intakt verbliebenen Bremskreises gebildet oder von einem mit diesem Bremsdruck zumindest korrelierenden Druck, wie weiter oben bereits erläutert worden ist. Insofern nutzt die Erfindung auch die Eigenschaften eines üblichen Druckregelmoduls als Druckmodulator.

Es versteht sich, dass anstatt eines solchen Druckregelmoduls auch jeglicher andere Druckmodulator verwendet werden kann, welcher elektrisch und pneumatisch steuerbar ist, beispielsweise ein elektrisch und pneumatisch steuerbares Relaisventil. Auch kann bei der Bremsvorrichtung
a) die erste elektronische Steuerung in den ersten Druckmodulator und/oder
b) die zweite elektronische Steuerung in den zweiten Druckmodulator integriert sein.

Bevorzugt können zur Erhöhung der Ausfallsicherheit der Bremsvorrichtung wenigstens die Komponenten des ersten Bremskreis von einer ersten elektrischen Energiequelle und wenigstens die Komponenten des zweiten Bremskreises von einer zweiten, von der ersten elektrischen Energiequelle (Power1) unabhängigen elektrischen Energiequelle mit elektrischer Energie versorgt sein.

Auch kann zwischen der ersten elektronischen Steuerung und der zweiten elektronischen Steuerung eine Kommunikationsverbindung vorgesehen sein, beispielsweise zum Zweck einer Fremdüberwachung der ersten elektronischen Steuerung durch die zweite elektronischen Steuerung und/oder umgekehrt. Denkbar ist auch eine Übermittlung eines beispielsweise im Rahmen einer Selbstüberwachung erzeugten Fehler- oder Ausfallsignals durch die von einem Fehler oder Ausfall betroffene elektronische Steuerung an die jeweils intakte elektronischen Steuerung, damit diese beispielsweise (erst) auf das übermittelte Fehler- oder Ausfallsignal hin, wie oben beschrieben das erste oder zweite Steuersignal für das erste oder zweite Drucksteuerventil erzeugt.

Auch kann bei der Bremsvorrichtung
a) zwischen wenigstens einem ersten Druckausgang des ersten Druckmodulators, an dem dieser den ersten Bremsdruck in die erste Bremsleitung aussteuert und einem zweiten Steuereingang des zweiten Druckmodulators eine erste Steuerleitung gezogen sein, von welcher zumindest ein Abschnitt zum Führen des ersten Steuerdrucks ausgebildet ist, und/oder
b) zwischen wenigstens einem zweiten Druckausgang des zweiten Druckmodulators, an dem dieser den zweiten Bremsdruck in die zweite Bremsleitung aussteuert und einem ersten Steuereingang des ersten Druckmodulators eine zweite Steuerleitung gezogen ist, von welcher zumindest ein Abschnitt zum Führen des zweiten Steuerdrucks ausgebildet ist.

In der ersten Steuerleitung und/oder in der zweiten Steuerleitung kann auch insbesondere eine Beeinflussung oder eine Veränderung des ersten Bremsdrucks und/oder des zweiten Bremsdrucks (z.B. insbesondere temporäres Erhöhen, Senken, Sperren oder Halten) stattfinden, um den ersten Steuerdruck und/oder den zweiten Steuerdruck zu generieren, beispielsweise durch eine dort angeordnete Ventilanordnung, insbesondere eine Magnetventilanordnung.

Zur Erhöhung der Ausfallsicherheit der Bremsvorrichtung kann auch vorgesehen sein, dass
a) der erste Druckmodulator wenigstens zwei erste Druckausgänge aufweist, an denen dieser jeweils einen ersten Bremsdruck in jeweils eine erste Bremsleitung aussteuert, und ein erstes Select-High-Ventil vorgesehen ist, welches den größeren der beiden ersten Bremsdrücke an einen zweiten Steuereingang des zweiten Druckmodulators weiterleitet, und/oder dass
b) der zweite Druckmodulator wenigstens zwei zweite Druckausgänge aufweist, an denen dieser jeweils einen zweiten Bremsdruck in jeweils eine zweite Bremsleitung aussteuert, und ein zweites Select-High-Ventil vorgesehen ist, welches den größeren der beiden zweiten Bremsdrücke an einen ersten Steuereingang des ersten Druckmodulators weiterleitet.

Falls daher eine Aussteuerung eines der beiden Bremsdrücke durch einen Druckmodulator nicht oder nicht in ausreichendem Maße möglich ist, kann der jeweils korrekt ausgesteuerte Bremsdruck die Ausgangsbasis für den ersten oder zweiten Steuerdruck bilden.

Weiterhin kann dadurch auch eine Art Select-High-ABS-Regelung zwischen dem ersten Bremskreis und dem zweiten Bremskreis realisiert werden, weil dann der auf der Fahrzeugseite mit dem größeren Reibwert der Fahrbahn erzeugte größere Bremsdruck als Basis für den Steuerdruck des jeweils anderen Bremskreises herangezogen wird.

Auch kann die Bremsvorrichtung ein Anhängersteuermodul umfassen, welches
a) von der ersten elektronischen Steuerung oder von der zweiten elektronischen Steuerung elektrisch, und/oder
b) von dem ersten Bremsdruck oder von dem zweiten Bremsdruck gesteuert ist, und/oder
c) von dem ersten Steuerdruck (Stp1) und/oder dem zweiten Steuerdruck (Stp2) gesteuert ist.

Das Anhängersteuermodul kann insbesondere mit oder ohne integrierte Steuerelektronik ausgeführt sein und einen Anhängerbremsdruck an einen Kupplungskopf "Bremse" aussteuern. Im Falle einer integrierten Steuerelektronik und eines integrierten Drucksensors kann auch eine Regelung des Anhängerbremsdrucks realisiert sein.

Bevorzugt ist das Anhängersteuermodul im Normalfall von der ersten elektronischen Steuerung und/oder von der zweiten elektronischen Steuerung elektrisch und im Backup-Fall pneumatisch gesteuert, insbesondere durch den ersten Bremsdruck und/oder den zweiten Bremsdruck.

In einem ersten Backup-Fall, in dem der erste Bremskreis elektrisch ausgefallen ist, wird der erste Bremsdruck abhängig von dem ersten Steuerdruck erzeugt, der mit dem zweiten Bremsdruck zumindest korreliert. Damit ist auch eine pneumatische Steuerung des Anhängersteuermoduls durch den ersten Bremsdruck gewährleistet, auch wenn der erste Bremskreis elektrisch ausgefallen ist.

Andererseits kann das Anhängersteuermodul in einem zweiten Backup-Fall auch noch durch den zweiten Bremsdruck pneumatisch gesteuert werden, in welchem der zweite Bremskreis elektrisch ausgefallen ist, weil dann der zweite Bremsdruck abhängig von dem zweiten Steuerdruck erzeugt wird, der mit dem ersten Bremsdruck zumindest korreliert. Infolgedessen kann mit der Erfindung auch eine mehrkreisige Anhängerbremssteuerung realisiert werden.

Die Erfindung betrifft auch ein Fahrzeug mit einer oben beschriebenen Bremsvorrichtung, insbesondere ein Nutzfahrzeug. Das Fahrzeug kann insbesondere wenigstens teilautonom oder auch vollständig autonom gesteuert sein.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: einen schematischen Schaltplan einer bevorzugten Ausführungsform einer Bremsvorrichtung gemäß der Erfindung;
- Fig.2: einen schematischen Schaltplan einer weiteren Ausführungsform einer Bremsvorrichtung gemäß der Erfindung;
- Fig. 3: einen schematischen Schaltplan einer weiteren Ausführungsform einer Bremsvorrichtung gemäß der Erfindung;
- Fig. 4: einen schematischen Schaltplan der Ausführungsform von Fig.1, die durch weitere Merkmale ergänzt worden ist.

### Beschreibung der Ausführungsbeispiele

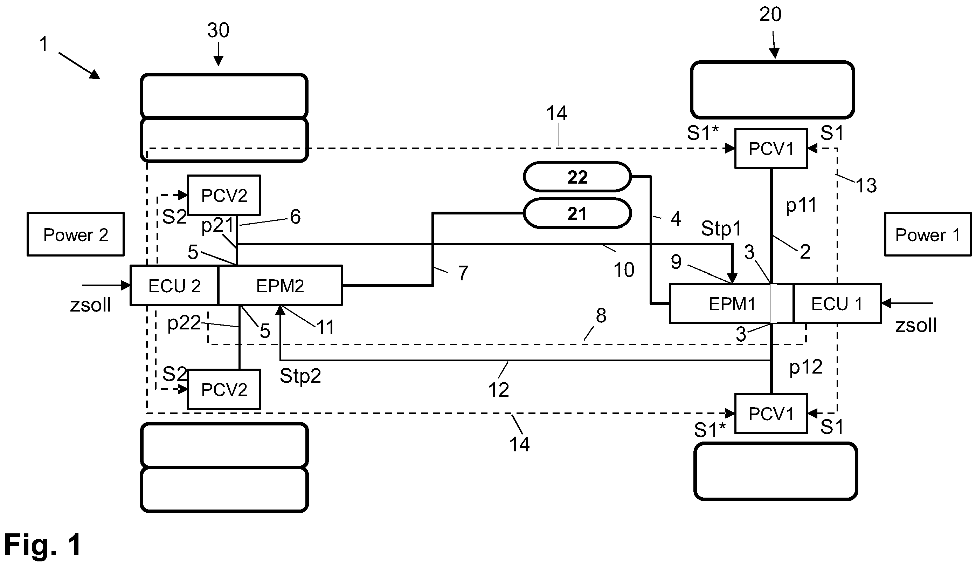

Die **Fig. 1** zeigt einen schematischen Schaltplan einer bevorzugten Ausführungsform einer Bremsvorrichtung 1 insbesondere für ein hier beispielsweise zweiachsiger Nutzfahrzeug gemäß der Erfindung, welche hier eine elektro-pneumatische Betriebsbremsvorrichtung ist und weiterhin insbesondere ein EBS umfasst.

Die Bremsvorrichtung 1 umfasst einen ersten Bremskreis, hier beispielsweise einen Vorderachs-Bremskreis für die Vorderachse 20 mit einer ersten elektronischen Steuerung ECU1, einem hier beispielsweise einkanaligen ersten elektro-pneumatischen Druckregelmodul EPM1 und mit je einem ersten, beispielsweise als pneumatischer Betriebsbremszylinder ausgeführten und hier nicht gezeigten Bremsaktuator an jeweils einem rechten und linken Rad der Vorderachse sowie zwei erste Drucksteuerventile PCV1 in ersten Bremsleitungen 2 zwischen jeweils einem ersten Druckausgang 3 des ersten Druckregelmoduls EPM1 und dem betreffenden Bremsaktuator. Die beiden ersten Bremsleitungen 2 führen dann jeweils einen ersten, von dem ersten Druckregelmodul EPM1 ausgesteuerten Bremsdruck p11, p12 von zwei ersten Druckausgängen 3 des ersten Druckregelmoduls EPM1 in die ersten Bremsaktuatoren, der dann seitenweise, d.h. hier radindividuell durch das betreffende erste Drucksteuerventil PCV1 moduliert werden kann, insbesondere im Sinne einer Verarbeitung oder Umsetzung einer vorgegebenen Soll-Verzögerung zsoll, und/oder einer Fahrdynamikregelung wie ABS, ASR und/oder ESP und/oder einer Fahrassistenzfunktion.

Das erste Druckregelmodul EPM1 wird primär, d.h. im Normalfall von der ersten elektronischen Steuerung ECU1 elektrisch und sekundär, d.h. im Backup-Fall durch einen ersten Steuerdruck Stp1 gesteuert, um in den ersten Bremsleitungen 2 die ersten Bremsdrücke p11, p12 zu erzeugen.

Das erste Druckregelmodul EPM1 wird über eine erste Vorratsleitung 4 von einem ersten Druckluftvorrat 22 mit Druckluft versorgt, der dann ebenfalls einen Bestandteil des Vorderachs-Bremskreises bildet. Außerdem werden das erste Druckregelmodul EPM 1, die beiden ersten Drucksteuerventile PCV1 und auch die erste elektronische Steuerung ECU 1 von einer ersten elektrischen Energieversorgung Power 1 mit elektrischer Energie versorgt. Die von dem ersten Druckregelmodul EPM1 ausgesteuerten ersten Bremsdrücke p11 und p12 können durch die in den ersten Bremsleitungen 2 angeordneten ersten Drucksteuerventile PCV1 seitenweise oder radindividuell moduliert werden, insbesondere im Sinne einer Fahrdynamikregelung wie ABS, ASR und/oder ESP und/oder einer Fahrassistenzfunktion. Hierzu können die ersten Drucksteuerventile PCV1 durch ein mittels einer ersten Signalleitung 13 gesandtes Signal S1 von der ersten elektronischen Steuerung ECU1 angesteuert werden.

Weiterhin umfasst die Bremsvorrichtung 1 einen zweiten Bremskreis, hier beispielsweise einen Hinterachs-Bremskreis für die Hinterachse 30 mit einer zweiten elektronischen Steuerung ECU2, einem zweiten Druckmodulator EPM2, der hier beispielsweise als 2-Kanal-Druckregelmodul ausgeführt ist, und mit zwei hier nicht gezeigten, beispielsweise als pneumatische Betriebsbremszylinder ausgeführten zweiten Bremsaktuatoren an jeweils einem rechten und linken Rad der Hinterachse. Die pneumatischen Betriebsbremszylinder an der Hinterachse 30 können mit Federspeicherbremszylindern einer Feststellbremsvorrichtung kombiniert sein, um zusammen Kombizylinder auszubilden.

Das zweite Druckregelmodul EPM2 wird primär von der zweiten elektronischen Steuerung ECU2 elektrisch und sekundär durch einen zweiten Steuerdruck Stp2 gesteuert, um in von zwei zweiten Druckausgängen 5 gezogenen zweiten Bremsleitungen 6 jeweils einen zweiten Bremsdruck p21 und p22 für die zweiten Bremsaktuatoren zu erzeugen, wobei diese zweiten Bremsdrücke p21 und p22 aufgrund der zweikanaligen Ausführung des zweiten Druckregelmoduls EPM2 rechts und links, d.h. seiten- oder radweise individuell gesteuert oder geregelt werden können. Unabhängig davon oder zusätzlich können die von dem zweiten Druckregelmodul EPM2 ausgesteuerten zweiten Bremsdrücke p21 und p22 durch die in den zweiten Bremsleitungen 6 angeordneten zweiten Drucksteuerventile PCV2 ebenfalls seitenweise oder radindividuell moduliert werden, ebenfalls insbesondere im Sinne einer Fahrdynamikregelung wie ABS, ASR und/oder ESP und/oder einer Fahrassistenzfunktion. Hierzu können die zweiten Drucksteuerventile PCV2 durch ein Signal S2 von der zweiten elektronischen Steuerung ECU2 angesteuert werden. Die beiden zweiten Bremsleitungen 6 erstecken sich von den beiden zweiten Druckausgängen 5 des zweiten Druckregelmoduls EPM2 bis zu den zweiten Bremsaktuatoren, wobei in den zweiten Bremsleitungen 6 jeweils ein zweites Drucksteuerventil PCV2 angeordnet ist.

Das zweite Druckregelmodul EPM2 wird von einem zweiten Druckluftvorrat 21 über eine zweite Vorratsleitung 7 mit Druckluft versorgt, der dann ebenfalls einen Bestandteil des Hinterachs-Bremskreises bildet. Außerdem werden das zweite Druckregelmodul EPM 2, die beiden zweiten Drucksteuerventile PCV2 und auch die zweite elektronische Steuerung ECU 2 von einer von der ersten elektrischen Energieversorgung Power 1 unabhängigen zweiten Energieversorgung Power 2 mit elektrischer Energie versorgt.

Die ersten und zweiten elektronischen Steuerungen ECU1 und ECU 2 kommunizieren beispielsweise über eine Kommunikationseinrichtung 8. Beispielsweise die erste elektronische Steuerungen ECU1 und die zweiten elektronische Steuerung ECU 2 sind jeweils mit einer Selbstüberwachungsfunktion versehen, dergestalt, dass bei einem detektierten Fehler oder Ausfall der betreffenden elektronischen Steuerung ECU1 oder ECU 2 ein Ausfall- oder Fehlersignal an die intakt verbliebene elektronische Steuerung ECU1 oder ECU 2 übermittelt wird, die dann in dem so entstandenen Backup-Fall die weiter unten beschriebenen Maßnahmen durchführen kann. Die Kommunikationseinrichtung 8 kann beispielsweise durch einen CAN-Datenbus gebildet werden, an welchen auch noch weitere elektronische Steuerungen oder Komponenten angeschlossen sein können. Eine solche Komponente kann beispielsweise im Falle einer Betriebsbremsung ein Bremsanforderungssignal erzeugen, das dann sowohl von ersten elektronischen Steuerungen ECU1 als auch von der zweiten elektronischen Steuerungen ECU2 empfangen und verarbeitet werden kann.

Hier beispielsweise zwischen einem zweiten Druckausgang 5 der beiden zweiten Druckausgänge des zweiten Druckregelmoduls EPM2 oder einer zweiten Bremsleitung 6 der beiden zweiten Bremsleitungen 6 und einem ersten pneumatischen Steuereingang 9 des ersten Druckregelmoduls EPM1, der für die sekundäre pneumatische Steuerung des ersten Druckregelmoduls EPM1 vorgesehen und mit dessen integriertem Backup-Magnetventil verbunden ist, erstreckt sich eine erste Steuerleitung 10, die dann hier beispielsweise den einen zweiten Bremsdruck p21 der vom zweiten Druckregelmodul EPM2 ausgesteuerten beiden zweiten Bremsdrücke p21 und p22 hier beispielsweise unverändert und direkt als ersten Steuerdruck Stp1 in den ersten pneumatischen Steuereingang 9 des ersten Druckregelmoduls EPM1 einsteuert. Dabei kann der betreffende zweite Druckausgang 5 ein beliebiger der beiden zweiten Druckausgänge 5 des zweiten Druckregelmoduls EPM2 sein, so dass beispielsweise ein beliebiger der beiden Bremsdrücke p21 und p22 hier beispielsweise unverändert und direkt als Steuerdruck Stp1 für das erste Druckregelmodul EPM1 herangezogen wird.

In analoger Weise kann sich beispielsweise zwischen einem der beiden ersten Druckausgänge 3 des ersten Druckregelmoduls EPM1 oder einer ersten Bremsleitung 2 der beiden ersten Bremsleitungen 2 und einem zweiten pneumatischen Steuereingang 11 des zweiten Druckregelmoduls EPM2, der für die sekundäre pneumatische Steuerung des zweiten Druckregelmoduls EPM2 vorgesehen und mit dessen integriertem Backup-Magnetventil verbunden ist, eine zweite Steuerleitung 12 erstrecken, die dann beispielsweise den einen ersten Bremsdruck p12 der beiden vom ersten Druckregelmodul EPM1 ausgesteuerten ersten Bremsdrücke p11, p12 hier beispielsweise direkt und unverändert als zweiten Steuerdruck Stp2 in den zweiten pneumatischen Steuereingang 11 des zweiten Druckregelmoduls EPM2 einsteuert.

Weiterhin ist hier beispielsweise sowohl in der ersten elektronischen Steuerung ECU1 als auch in der zweiten elektronischen Steuerung ECU2, d.h. in redundanter Weise, jeweils wenigstens eine Funktion als Software implementiert, durch welche die ersten Bremsdrücke p11 und p12 mit Hilfe der ersten Drucksteuerventile PCV1 und die zweiten Bremsdrücke p21 und p22 mit Hilfe der zweiten Drucksteuerventile PCV2 seitenweise oder radweise individuell steuer- oder regelbar sind. Diese wenigstens eine Funktion kann beispielsweise eine achslastabhängige Bremsdrucksteuerung, eine Antiblockierfunktion (ABS), eine Antriebsschlupfregelung (ASR) und/oder eine Fahrdynamikregelung (ESP) und/oder eine Fahrassistenzfunktion umfassen ist aber nicht darauf beschränkt.

Um eine Steuerung oder Regelung der ersten Drucksteuerventile PCV1 durch die erste elektronische Steuerung ECU1 und zugleich auch durch die zweite elektronische Steuerung ECU2 jeweils durch erste Signale S1 und S1* zu realisieren, sind die ersten Drucksteuerventile PCV1 hier beispielsweise nicht nur von der wenigstens einen, in der ersten Steuerelektronik ECU1 implementierten Funktion mittels der über die ersten Signalleitungen 13 übermittelten ersten Signale S1, sondern zusätzlich oder alternativ auch von der wenigstens einen in der zweiten Steuerelektronik ECU2 (redundant) implementierten Funktion mittels erster Ersatz-Signale S1* steuer- oder regelbar, welche durch zweite Signalleitungen 14 übermittelt werden, die zwischen der zweiten Steuerelektronik ECU2 und den ersten Drucksteuerventilen PCV1 gezogen sind.

Im Normalfall, d.h. im Rahmen der primären elektrischen Steuerung wird bei einer Betriebsbremsung jeweils ein Bremsanforderungssignal in die ersten und zweiten elektronischen Steuerungen ECU1 und ECU 2 eingesteuert, das eine Soll-Verzögerung zsoll repräsentiert oder von dieser abhängig ist. Diese Soll-Verzögerung zsoll kann beispielweise von einem fahrerbetätigten und hier nicht gezeigten Fußbremsmodul betätigungsabhängig generiert werden oder von einem Assistenzsystem wie beispielsweise einer adaptiven Geschwindigkeitsregelung (ACC) oder einem Notbremsassistenten. Auch kann die Soll-Verzögerung zsoll bzw. das Bremsanforderungssignal durch eine elektronische Steuerung eines Autopiloten vorgegeben werden. Wie oben beschrieben, kann die Komponente, die das Bremsanforderungssignal erzeugt, auch an die Kommunikationseinrichtung 8 angeschlossen sein. Alternativ kann das die Soll-Verzögerung zsoll repräsentierende Bremsanforderungssignal auch in lediglich eine der beiden elektronischen Steuerungen ECU1 oder ECU2 eingesteuert und in die Kommunikationseinrichtung 8 durchgeschleift werden, woraufhin die jeweils andere elektronische Steuerung ECU1 oder ECU2 das Bremsanforderungssignal dann mitlesen kann.

Die ersten und zweiten elektronischen Steuerungen ECU1 und ECU 2 verarbeiten dann jeweils das Bremsanforderungssignal und geben abhängig von diesem den ersten und zweiten Druckregelmoduln EPM1 und EPM2 Sollwerte für die Bremsdrücke vor, d.h. dem ersten Druckregelmodul EPM1 einen (gemeinsamen) ersten Soll-Bremsdruck p1soll für die ersten Bremsdrücke p11 und p12, und dem zweiten Druckregelmodul EPM2 zweite Soll-Bremsdrücke p21soll und p22soll für die zweiten Soll-Bremsdrücke p21 und p22. Der erste Soll-Bremsdruck p1soll ist für beide Fahrzeugseiten bzw. für die Räder rechts und links identisch, weil das erste Druckregelmodul EPM1 hier beispielsweise als 1-KanalModul ausgebildet ist. Hingegen können die von dem zweiten, als 2-Kanalmodul ausgebildeten zweiten Druckregelmodul EPM2 ausgesteuerten zweiten Soll-Bremsdrücke p21soll und p22soll voneinander abweichen. Auch kann der erste Soll-Bremsdruck p1soll von den zweiten Soll-Bremsdrücken p21soll und p22soll abweichen, weil diese Drücke infolge einer hier beispielsweise vorhandenen achslastabhängigen Bremsdruckregelung (ALB) unterschiedlich vorgegeben werden können.

Die beiden ersten und zweiten Druckregelmodule EPM1 und EPM2 umfassen in bekannter Weise jeweils eine integrierte elektronische Steuerung, die eine integrierte Einlass-Auslassventilkombination ansteuert, um einen Steuerdruck für ein ebenfalls integriertes Relaisventil zu erzeugen, das daraufhin von dem jeweils angeschlossenen Druckluftvorrat 21 oder 22 gespeisten Vorratsdruck abgeleitete erste und zweite Bremsdrücke p1 bzw. p21 und p22 in die angeschlossenen ersten und zweiten Bremsleitungen 2, 6 einsteuern.

Jeweils durch einen integrierten Drucksensor werden die jeweils ausgesteuerten ersten und zweiten Ist-Bremsdrücke p1 bzw. p21 und p22 p2 gemessen und jeweils an die integrierte elektronische Steuerung gemeldet, welche daraufhin die integrierte Einlass-Auslass-Magnetventilkombination ansteuert, um eine etwaige Abweichung zu den ersten und zweiten Soll-Bremsdrücken p1soll bzw. p21soll und p22soll abzugleichen, welcher der integrierten elektronischen Steuerung jeweils abhängig von der Soll-Verzögerung zsoll jeweils durch ein elektrisches Signal vorgegeben wird. Die zuvor erwähnten Komponenten sind bei dem 2-kanaligen zweiten Druckregelmodul EPM2 dann je Kanal einmal vorhanden, bei dem 1-kanaligen ersten Druckregelmodul EPM1 insgesamt nur einmal und jeweils beispielsweise in einem gemeinsamen Gehäuse zusammengefasst.

Im Normalfall steuern daher die beiden Druckregelmodule EPM1 und EPM2 geregelte erste und zweite Bremsdrücke p11, p12 bzw. p21 und p22 in die ersten und zweiten Bremsleitungen 2, 6 und damit in die ersten und zweiten Bremsaktuatoren ein. Die zweiten Drucksteuerventile PCV2 sind im Normalfall von der zweiten elektronischen Steuerung ECU2 mittels eines zweiten Signals S2 in die Durchgangsstellung geschaltet, da eine radindividuelle Steuerung oder Regelung der zweiten Bremsdrücke p21 und p22 an den Rädern auf der rechten und linken Seite der Hinterachse bereits durch die 2-kanalige Ausführung des zweiten Druckregemoduls EPM2 möglich ist und auch bevorzugt derart realisiert wird. Jedoch ist auch eine Ausführung möglich, in welcher wenigstens eine in der zweiten elektronischen Steuerung ECU2 integrierte Funktion die zweiten Drucksteuerventile PCV2 mit zweiten Signalen S2 ansteuert, welche beispielsweise eine Fahrassistenz- oder Fahrdynamikregelfunktion ist.

Ebenso sind jeweils die in die beiden Druckregelmodule EPM1 und EPM2 integrierten Back-Magnetventile im Normalfall (bestromt) in ihre Sperrstellung geschaltet, um die parallele sekundäre pneumatische Steuerung der ersten und zweiten Druckregelmodule EPM1 und EPM2 zu verhindern.

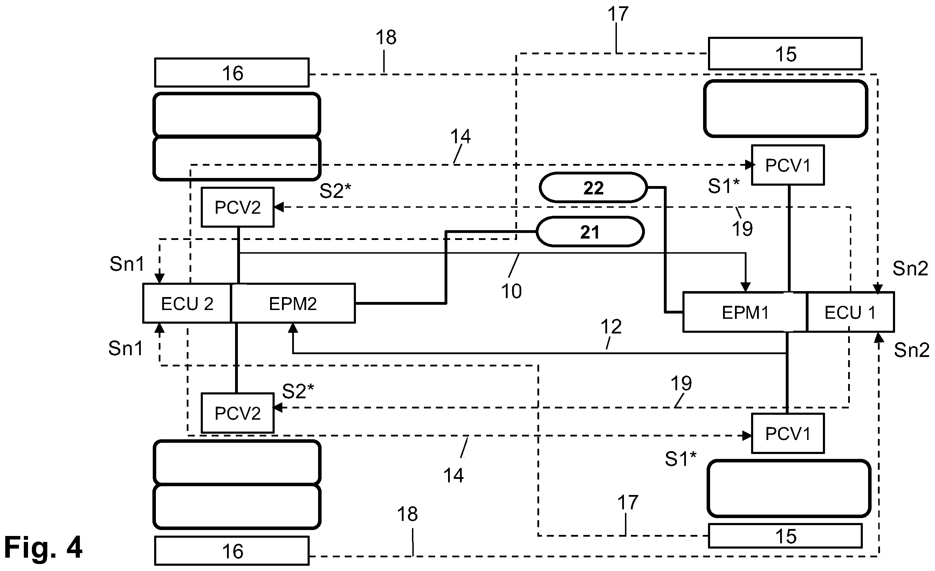

Falls nun im Normalfall bei der Betriebsbremsung beispielsweise an den Rädern der Vorderachse ein zu hoher Bremsschlupf auftritt, was eine in der ersten elektronischen Steuerung ECU1 implementierte ABS-Funktion anhand von durch an den Rädern der Vorderachse angeordnete und in **Fig. 1** zwar nicht aber in **Fig. 4** dargestellte erste Raddrehzahlsensoren 15 erfasste Raddrehzahlen feststellen kann, so gibt hier insbesondere lediglich die erste elektronische Steuerung ECU1 erste insbesondere pulsweitenmodulierte Signale S1 an die beiden ersten Drucksteuerventile PCV1 aus, um die ersten Bremsdrücke p11 und p12 durch zyklisches Drucksenken, Druckhalten und Drucksteigern so zu steuern, dass der Bremsschlupf an den Vorderrädern auf einen vorgegebenen Soll-Bremsschlupf radindividuell eingeregelt wird.

Weiterhin werden die Raddrehzahlsignale der ersten Raddrehzahlsensoren 15 auch in die zweite elektronische Steuerung ECU2 eingesteuert **(****Fig. 4****),** damit auch diese die ersten Drucksteuerventile PCV1 an der Vorderachse durch erste Ersatz-Signale S1* beispielsweise zum Zwecke einer Bremsschlupfregelung ansteuern kann. Da die zweite elektronische Steuerung ECU2 durch das Ausbleiben eines Fehler- oder Ausfallsignals auf der Kommunikationseinrichtung 8 die erste elektronische Steuerung ECU1 als intakt interpretieren kann, unterdrückt sie jedoch vorzugsweise ein Erzeugen der ersten Ersatz-Signale S1* und damit eine parallele Ansteuerung der beiden ersten Drucksteuerventile PCV1.

Fällt nun bei intakter primärer elektrischer Steuerung des zweiten Druckregelmoduls EPM2 die primäre elektrische Steuerung des ersten Druckregelmoduls EPM1 aus, sei es, weil die erste elektrische Energieversorgung Power 1 ausgefallen ist oder weil elektrische Komponenten des ersten Druckregelmoduls EPM1 einen Fehler aufweisen und/oder ein elektrischer Kontakt- oder Leitungsfehler vorliegt, kommt als Backup die sekundäre pneumatische Steuerung des ersten Druckregelmoduls EPM1 durch den über die erste Steuerleitung 10 zugeführten zweiten Bremsdruck p21 des ersten Kanals des zweiten Druckregelmoduls EPM2 zum Tragen, welcher dann hier beispielsweise direkt und unverändert den ersten Steuerdruck Stp1 für das erste Druckregelmodul EPM1 bildet.

Während bisher, d.h. bei noch intakter elektrischer Steuerung das integrierte Backup-Magnetventil den an dem ersten pneumatischen Steuereingang 9 des ersten Druckregelmoduls EPM1 anstehenden ersten pneumatischen Steuerdruck Stp1 durch Einnehmen seiner bestromten Sperrstellung zurückgehalten hat, so wird dieses Backup-Magnetventil im Fehlerfall automatisch entstromt und schaltet dadurch in seine Durchgangsstellung, woraufhin der erste pneumatischen Steuerdruck Stp1, der hier beispielsweise dem zweiten Bremsdruck p21 des ersten Kanals des zweiten Druckregelmoduls EPM2 entspricht, an dem integrierten Relaisventil wirksam werden kann, um die ersten Bremsdrücke p11 und p12 abhängig von dem ersten pneumatischen Steuerdruck Stp1 zu erzeugen.

Zwar kann die ausgefallene erste elektronische Steuerung ECU1 die ersten Drucksteuerventile PCV1 dann nicht mehr durch die ersten Signale S1 ansteuern. Jedoch können auch im Backup-Fall die von dem ersten Druckregelmodul EPM1 abhängig von dem einen zweiten Bremsdruck p12 ausgesteuerten ersten Bremsdrücke p11 und p12 dann von den in den ersten Bremsleitungen 2 angeordneten ersten Drucksteuerventilen PCV1 weiterhin seitenweise oder radindividuell angepasst oder moduliert werden. Dabei kommt zum Tragen, dass die zuvor erwähnte wenigstens eine Funktion, hier z.B. die ABS-Funktion ebenfalls in der zweiten elektronischen Steuerung ECU2 implementiert ist. Da in dem hier vorliegenden Fall die zweite elektronische Steuerung ECU2 über die Kommunikationseinrichtung 8 von der ersten elektronischen Steuerung ECU1 ein Ausfall- oder Fehlersignal erhalten hat, erzeugt die zweite elektronische Steuerung ECU2 bevorzugt erst nach dem Empfang des Ausfall- oder Fehlersignals der ersten elektronischen Steuerung ECU1 die ersten Ersatz-Signale S1* zur Steuerung der beiden ersten Drucksteuerventile PCV und steuert diese über die zweiten Signalleitungen 14 dort ein, um die ersten Bremsdrücke p11, p12 hier beispielsweise im Sinne der Bremsschlupfregelung (ABS) zu modulieren. Damit ist auch bei ausgefallenem elektrischem Vorderachs-Bremskreis eine Modulation der ersten Bremsdrücke p11 und p12 hier beispielsweise im Sinne einer ABS-Regelung möglich.

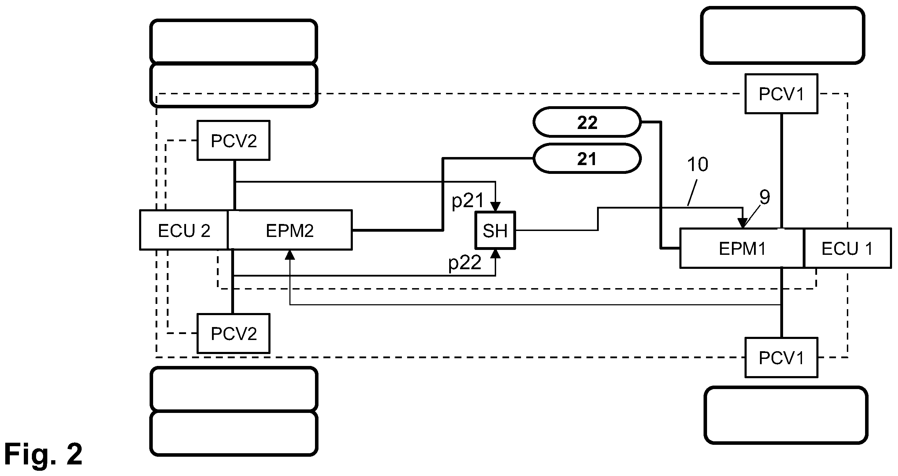

Die in **Fig. 2** dargestellte Ausführungsform der Bremsvorrichtung unterscheidet sich von der Ausführungsform von **Fig. 1** lediglich darin, dass ein Select-High-Ventil SH vorgesehen ist, welches lediglich den größeren der beiden zweiten Bremsdrücke p21 oder p22, welche das zweite Druckregelmodul EPM2 an seinen beiden zweiten Druckausgängen 5 erzeugt, über die erste Steuerleitung 10 an den pneumatischen ersten Steuereingang 9 des ersten Druckmodulators EPM 1 weiterleitet. Dies kann für einen Fall relevant sein, in welchem bei einer Betriebsbremsung mit beispielsweise aktivierter Bremsschlupfregelung an der Hinterachse der eine Kanal des zweiten Druckregelmoduls EPM2 einen (relativ niedrigen) zweiten Bremsdruck p21, der andere Kanal aber einen demgegenüber größeren Bremsdruck p22 liefert, der dann als erster Steuerdruck Stp1 für die sekundäre pneumatische Steuerung des ersten Druckregelmoduls EPM1 herangezogen wird. Damit wird eine Art Select-High-Regelung zwischen dem Vorderachs-Bremskreis und dem Hinterachs-Bremskreis realisiert, weil dann an der Hinterachse der (größere) zweite Bremsdruck p22 auf der Seite mit dem größeren Reibwert als Basis für den ersten Steuerdruck Stp1 an der Vorderachse 20 herangezogen wird.

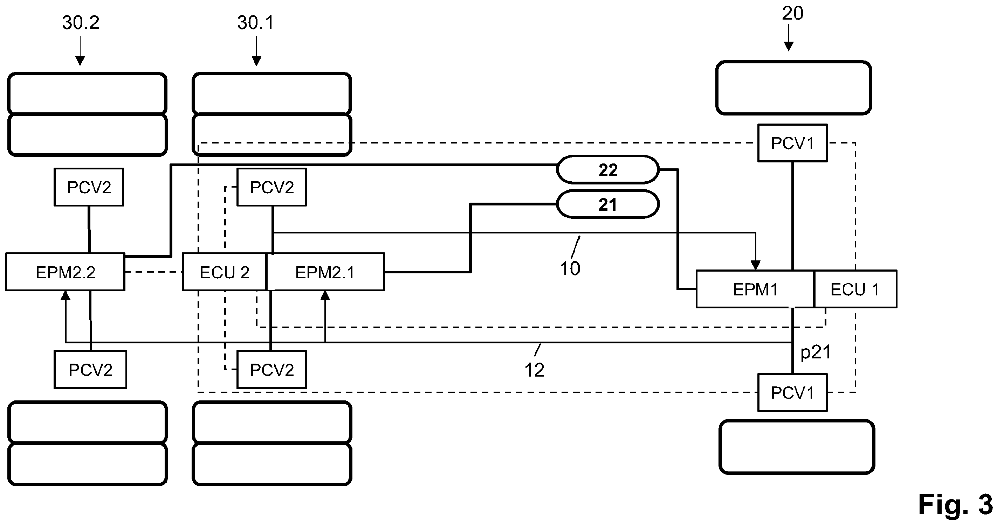

Die Ausführungsform von **Fig. 3** unterscheidet sich von der Ausführungsform von **Fig 1** darin, dass zwei Hinterachsen, eine erste Hinterachse 30.1 und eine zweite Hinterachse 30.2 vorgesehen sind, wobei die zweiten Bremsdrücke der Bremsaktuatoren der beiden Hinterachsen 30.1 und 30.2 von jeweils einem zweiten Druckregelmodul EPM2.1 und EPM2.2 geregelt werden. Insofern umfasst der Hinterachs-Bremskreis hier zwei zweite Druckregelmodule EPM21 und EPM22, die jeweils einer Hinterachse 30.1 und 30.2 zugeordnet sind. Die primäre elektrische Steuerung der beiden zweiten Druckregelmodule EPM2.1 und EPM2.2 erfolgt durch die zweite elektronische Steuerung ECU2. Sekundär werden die beiden zweiten Druckregelmodule EPM2.1 und EPM2.2 durch wenigstens einen ersten Bremsdruck p11, p12 der von dem ersten Druckregelmodul EPM1 ausgesteuerten ersten Bremsdrücke p11, p12, hier beispielsweise von dem Bremsdruck p12 pneumatisch gesteuert. Dieses Beispiel zeigt, dass auch mehrere Druckregelmodule eines Bremskreises auf der Basis des Bremsdrucks eines anderen Bremskreises oder korrelierend mit diesem Bremsdruck im Backup-Fall pneumatisch gesteuert werden können.

In **Fig. 4** wird die oben bereits zu **Fig.1** angedeutete Verarbeitung von auf Raddrehzahlen der Räder basierenden Raddrehzahlsignalen von an den Rädern der Vorderachse 20 und den Rädern der Hinterachse 30 angeordneten ersten und zweiten Raddrehzahlsensoren 15, 16 durch die erste elektronische Steuerung ECU1 und die zweite elektronische Steuerung ECU2 näher beschrieben.

Die beiden ersten, den beiden Rädern des Vorderachs-Bremskreises zugeordneten Raddrehzahlsensoren 15 erzeugen abhängig von erfassten ersten Raddrehzahlen n1 der Vorderräder erste Raddrehzahlsignale Sn1 und steuern diese über dritte Signalleitungen 17 in die zweite elektronische Steuerung ECU2 ein. Zusätzlich oder alternativ kann vorgesehen sein, dass die zweiten, den Rädern des Hinterachs-Bremskreises zugeordneten Raddrehzahlsensoren 16 zweite Raddrehzahlsignale Sn2 erzeugen und über vierte Signalleitungen 18 in die erste elektronische Steuerung ECU1 einsteuern. Dadurch wird eine in Bezug auf die Bremskreise kreuzweise Verarbeitung der ersten und zweiten Raddrehzahlsignale Sn1 und Sn2 durch die ersten und zweiten elektronischen Steuerungen ECU1 und ECU2 realisiert.

Beispielsweise kann dann in einem Backup-Fall, in dem die erste elektronische Steuerung ECU1 ausgefallen ist, die zweite elektronische Steuerung ECU2 die ersten Ersatz-Signale S1* für die ersten Drucksteuerventile PCV1 abhängig von den ersten Raddrehzahlsignalen Sn1 erzeugen. Weiterhin kann dann auch in einem Backup-Fall, in dem die zweite elektronische Steuerung ECU2 ausgefallen ist, die erste elektronische Steuerung ECU1 die zweiten Ersatz-Signale S2* für die zweiten Drucksteuerventile PCV2 abhängig von den zweiten Raddrehzahlsignalen Sn2 erzeugen. Mit anderen Worten kann im Backup-Fall die Raddrehzahlerfassung durch die ersten und zweiten Raddrehzahlsensoren 15, 16 und die Ansteuerung der ersten und zweiten Drucksteuerventile PCV1 und PCV2 abhängig von den ersten und zweiten Raddrehzahlsignalen Sn1 und Sn2 in Bezug auf die Bremskreise kreuzweise erfolgen.

Im Normalfall verarbeitet die erste elektronische Steuerung ECU1 die ersten Raddrehzahlsignale Sn1 und steuert dann abhängig von diesen die ersten Drucksteuerventile PCV1 durch erste Signale S1 an, um die ersten Bremsdrücke p11 und p12 gemäß wenigstens einer implementierten Funktion zu modulieren. In gleicher Weise kann im Normalfall die zweite elektronische Steuerung ECU2 die zweiten Raddrehzahlsignale Sn2 verarbeiten und dann abhängig von diesen die zweiten Drucksteuerventile PCV2 durch zweite Signale S2 ansteuern, um die zweiten Bremsdrücke p21 und p22 gemäß wenigstens einer implementierten Funktion zu modulieren.

Wegen der oben beschriebenen, in Bezug auf die Bremskreise kreuzweisen Verarbeitung der ersten und zweiten Raddrehzahlsignale Sn1 und Sn2 und kreuzweisen Steuerung der ersten und zweiten Drucksteuerventile PCV1 und PCV2 ist jedoch auch in Backup-Fällen eine raddrehzahlabhängige Modulation der ersten und zweiten Bremsdrücke p11, p12 und p21, p22 durch die ersten und zweiten Drucksteuerventile PCV1 und PCV2 möglich.

Beispielsweise kann in dem Back-up Fall, in dem die primäre elektrische Steuerung des Hinterachs-Bremskreises ausgefallen ist, die intakte erste elektronische Steuerung ECU1 die dann abhängig von wenigstens einem der ersten Bremsdrücke p11, p12 erzeugten zweiten Bremsdrücke p21 und p22 in dem elektrisch ausgefallenen Hinterachs-Bremskreis trotzdem noch beispielsweise radindividuell abhängig von den Raddrehzahlsignalen Sn2 der zweiten Raddrehzahlsensoren 16 an den Rädern der Hinterachse einstellen, um an diesen Rädern beispielsweise raddrehzahlabhängige Steuer- oder Regelfunktionen wie ABS, ASR und/oder ESP auszuführen. Dazu erzeugt die erste elektronische Steuerung ECU1 abhängig von den durch die zweiten Raddrehzahlsensoren 16 erfassten zweiten Raddrehzahlen n2 der Räder der Hinterachse, d.h. abhängig von den über die vierten Signalleitungen 18 eingesteuerten zweiten Raddrehzahlsignalen Sn2 zweite Ersatz-Signale S2* und steuert diese über fünfte Signalleitungen 19 in die zweiten Drucksteuerventile PCV2 ein. Hierzu können die zweiten Raddrehzahlsensoren 16 über die erste elektronische Steuerung ECU1 beispielsweise von der ersten elektrischen Energieversorgung Power 1 mit elektrischer Energie versorgt werden.

In gleicher Weise wird dadurch auch möglich, dass in einem weiteren Back-up Fall, in welchem die primäre elektrische Steuerung des Vorderachs-Bremskreises ausfällt, die intakte zweite elektronische Steuerung ECU2 die ersten Bremsdrücke p11 und p12, die dann von wenigstens einem der beiden zweiten Bremsdrücke p21 oder p22 abgeleitet sind oder mit diesem wenigstens einen zweiten Bremsdruck p21, p22 korrelieren, in dem elektrisch ausgefallenen Vorderachs-Bremskreis trotzdem noch beispielsweise radindividuell abhängig von der Raddrehzahl der Räder des Vorderachs-Bremskreises einstellen, um an diesen Rädern eine raddrehzahlabhängige Steuerung oder Regelung wie ABS, ASR und/oder ESP auszuführen. Dazu erzeugt die zweite elektronische Steuerung ECU2 abhängig von den durch die ersten Raddrehzahlsensoren 15 erfassten Raddrehzahlen der Räder der Vorderachse, d.h. abhängig von den über die dritten Signalleitungen 17 eingesteuerten ersten Raddrehzahlsignalen Sn1 erste Ersatz-Signal S1* zur Steuerung der ersten Drucksteuerventile PCV1. Hierzu können die ersten Raddrehzahlsensoren 15 über die zweite elektronische Steuerung ECU2 beispielsweise von der zweiten elektrischen Energieversorgung Power 2 mit elektrischer Energie versorgt werden.

Auch kann die Bremsvorrichtung ein hier nicht dargestelltes elektro-pneumatisches Anhängersteuermodul umfassen, welches beispielsweise von der ersten elektronischen Steuerung ECU1 und von der zweiten elektronischen Steuerung ECU2 abhängig von dem Bremsanforderungssignal primär elektrisch und von wenigstens einem der ersten Bremsdrücke p11 oder p12 oder von wenigstens einem der zweiten Bremsdrücke p21 oder p22 sekundär pneumatisch gesteuert ist. Das Anhängersteuermodul kann insbesondere wie ein oben beschriebenes Druckregelmodul mit oder ohne integrierte Steuerelektronik ausgeführt sein und abhängig von seiner primären elektrischen Steuerung und seiner sekundären pneumatischen Steuerung einen Anhängerbremsdruck an einen Kupplungskopf "Bremse" aussteuern.

Im Normalfall wird das Anhängersteuermodul daher elektrisch und im Backup-Fall pneumatisch gesteuert. Wie oben beschrieben werden in einem ersten Backup-Fall, in dem der Vorderachs-Bremskreis elektrisch ausgefallen ist, die ersten Bremsdrücke p11, p12 abhängig von dem ersten Steuerdruck Stp1 erzeugt, der mit wenigstens einem der zweiten Bremsdrücke p21, p22 zumindest korreliert. Damit ist eine pneumatische Steuerung des Anhängersteuermoduls durch wenigstens einen der ersten Bremsdrücke p11, p12 gewährleistet, auch wenn der Vorderachs-Bremskreis elektrisch ausgefallen ist. Andererseits kann das Anhängersteuermodul auch noch durch wenigstens einen der zweiten Bremsdrücke p21, p22 pneumatisch in einem zweiten Backup-Fall gesteuert werden, in welchem der Hinterachs-Bremskreis elektrisch ausgefallen ist, weil dann wie oben beschrieben die zweiten Bremsdrücke p21, p22 abhängig von dem zweiten Steuerdruck Stp2 erzeugt, der mit wenigstens einem der ersten Bremsdrücke p11, p12 zumindest korreliert. Damit ist das Anhängersteuermodul auch abhängig von dem ersten Steuerdruck Stp1 und/oder abhängig von dem zweiten Steuerdruck Stp2 pneumatisch steuerbar.

Das Anhängersteuermodul kann insbesondere mit oder ohne integrierte Steuerelektronik ausgeführt sein Im Falle einer integrierten Steuerelektronik und eines integrierten Drucksensors kann auch eine Regelung des Anhängerbremsdrucks realisiert sein.

### Bezugszeichenliste

- 1: Bremsvorrichtung
- 2: erste Bremsleitungen
- 3: erste Druckausgänge
- 4: erste Vorratsleitung
- 5: zweite Druckausgänge
- 6: zweite Bremsleitungen
- 7: zweite Vorratsleitung
- 8: Kommunikationseinrichtung
- 9: erster pneumatischer Steuereingang
- 10: erste Steuerleitung
- 11: zweiter pneumatischer Steuereingang
- 12: zweite Steuerleitung
- 13: erste Signalleitungen
- 14: zweite Signalleitungen
- 15: erste Raddrehzahlsensoren
- 16: zweite Raddrehzahlsensoren
- 17: dritte Signalleitungen
- 18: vierte Signalleitungen
- 19: fünfte Signalleitungen
- 20: Vorderachse
- 21: zweiter Druckluftvorrat
- 22: erster Druckluftvorrat
- 30: Hinterachse
- 30.1: erste Hinterachse
- 30.2: zweite Hinterachse
- ECU1: erste elektronische Steuerung
- ECU2: zweite elektronische Steuerung
- S1: erste Signale
- S1*: erste Ersatz-Signale
- S2: zweite Signale
- S2*: zweite Ersatz-Signale
- p11/p12: erste Bremsdrücke
- p21/p22: zweite Bremsdrücke
- EPM1: erstes Druckregelmodul
- EPM2: zweites Druckregelmodul
- EPM2.1/2.2: zweite Druckregelmodule
- PCV1: erste Drucksteuerventile
- PCV2: zweite Drucksteuerventile
- Sn1: erste Raddrehzahlsignale
- Sn2: zweite Raddrehzahlsignale
- Power 1: erste elektrische Energieversorgung
- Power 2: zweite elektrische Energieversorgung
- SH: Select-High-Ventil
- Stp1: erster Steuerdruck
- Stp2: zweiter Steuerdruck
- n1: erste Raddrehzahlen
- n2: zweite Raddrehzahlen

## Patentansprüche

1. Druckmittelbetätigte und zumindest teilweise elektronische Bremsvorrichtung (1) für ein Fahrzeug, insbesondere für ein Nutzfahrzeug, wenigstens umfassend:
a) Einen ersten Bremskreis mit einer ersten elektronischen Steuerung (ECU1), wenigstens einem ersten elektro-pneumatischen Druckmodulator (EPM1) und wenigstens einem ersten Bremsaktuator, der ein erstes Rad abbremst, wobei der wenigstens eine erste Druckmodulator (EPM1) primär von der ersten elektronischen Steuerung (ECU1) elektrisch und sekundär durch einen ersten Steuerdruck (Stp1) steuerbar ist, um in wenigstens einer ersten Bremsleitung (2) einen ersten Bremsdruck (p11, p12) für den wenigstens einen ersten Bremsaktuator zu erzeugen,
b) einen zweiten Bremskreis mit einer zweiten elektronischen Steuerung (ECU2), wenigstens einem zweiten Druckmodulator (EPM2) und wenigstens einem zweiten Bremsaktuator, der ein zweites Rad abbremst, wobei der wenigstens eine zweite Druckmodulator (EPM2) primär von der zweiten elektronischen Steuerung (ECU2) elektrisch und sekundär durch einen zweiten Steuerdruck (Stp2) steuerbar ist, um in wenigstens einer zweiten Bremsleitung (6) einen zweiten Bremsdruck (p21, p22) für den wenigstens einen zweiten Bremsaktuator eines zweiten Rads zu erzeugen,
c) wenigstens ein erstes Drucksteuerventil (PCV1) in der ersten Bremsleitung (2), welches ausgebildet ist, um abhängig von einem ersten elektrischen Signal (S1, S1*) den ersten Bremsdruck (p11, p12) zu modulieren, **gekennzeichnet durch**
d) wenigstens ein zweites Drucksteuerventil (PCV2) in der zweiten Bremsleitung (6), welches ausgebildet ist, um abhängig von einem zweiten elektrischen Signal (S2, S2*) den zweiten Bremsdruck (p21, p22) zu modulieren, wobei
e) der erste Steuerdruck (Stp1) mit dem zweiten Bremsdruck (p21, p22) zumindest korreliert, und/oder wobei
f) der zweite Steuerdruck (Stp2) mit dem ersten Bremsdruck (p11, p12) zumindest korreliert, und wobei
g) das erste elektrische Signal (S1, S1*) und/oder das zweite elektrische Signal (S2, S2*) durch wenigstens eine in wenigstens einer elektronischen Steuerung (ECU1, ECU2) implementierten Funktion erzeugt wird.

2. Bremsvorrichtung nach Anspruch 1, **dadurch gekennzeichnet, dass** die Funktion ausgebildet und eingerichtet ist, um den ersten Bremsdruck (p11, p12) und/oder den zweiten Bremsdruck (p21, p22) zu steuern oder zu regeln.

3. Bremsvorrichtung nach einem der vorhergehenden Ansprüche, **dadurch gekennzeichnet, dass** die Funktion eine achslastabhängige Bremsdrucksteuerung, eine Antiblockierfunktion (ABS), eine Antriebsschlupfregelung (ASR), eine Verarbeitung oder Umsetzung eines eine Soll-Verzögerung (zsoll) repräsentierenden Signals und/oder eine Fahrdynamikregelung (ESP) und/oder eine Fahrassistenzfunktion umfasst.

4. Bremsvorrichtung nach einem der vorhergehenden Ansprüche, **dadurch gekennzeichnet, dass** die Funktion in der ersten elektronischen Steuerung (ECU1) und/oder in der zweiten elektronischen Steuerung (ECU2) oder in einer dritten Steuerung implementiert ist.

5. Bremsvorrichtung nach einem der vorhergehenden Ansprüche, **dadurch gekennzeichnet, dass**
a) wenigstens ein erster Raddrehzahlsensor (15) vorgesehen und ausgebildet ist, um eine erste Raddrehzahl (n1) des ersten Rads zu erfassen, und/oder
b) wenigstens ein zweiter Raddrehzahlsensor (16) vorgesehen und ausgebildet ist, um eine zweite Raddrehzahl (n2) des zweiten Rads zu erfassen.

6. Bremsvorrichtung nach Anspruch 5, **dadurch gekennzeichnet, dass** die Funktion ausgebildet und eingerichtet ist, dass sie
a) das erste elektrische Signal (S1, S1*) abhängig von der erfassten ersten Raddrehzahl (n1) und/oder abhängig von der erfassten zweiten Raddrehzahl (n2) erzeugt, und/oder
b) das zweite elektrische Signal (S2, S2*) abhängig von der erfassten ersten Raddrehzahl (n1) und/oder abhängig von der erfassten zweiten Raddrehzahl (n2) erzeugt.

7. Bremsvorrichtung nach Anspruch 5 oder 6, **dadurch gekennzeichnet, dass**
a) der wenigstens eine erste Raddrehzahlsensor (15) abhängig von der ersten Raddrehzahl (n1) ein erstes Raddrehzahlsignal (Sn1) erzeugt und in die zweite elektronische Steuerung (ECU2) einsteuert, und/oder dass
b) der wenigstens eine zweite Raddrehzahlsensor (16) abhängig von der zweiten Raddrehzahl (n2) ein zweites Raddrehzahlsignal (Sn2) erzeugt und in die erste elektronische Steuerung (ECU1) einsteuert.

8. Bremsvorrichtung nach Anspruch 7, **dadurch gekennzeichnet, dass**
a) die zweite elektronische Steuerung (ECU2) das erste Signal (S1, S1*) abhängig von dem ersten Raddrehzahlsignal (Sn1) erzeugt, und/oder dass
b) die erste elektronische Steuerung (ECU1) das zweite Signal (S2, S2*) abhängig von dem zweiten Raddrehzahlsignal (Sn2) erzeugt.

9. Bremsvorrichtung nach einem der vorhergehenden Ansprüche, **dadurch gekennzeichnet, dass** die erste elektronische Steuerung (ECU1) den wenigstens einen ersten Druckmodulator (EPM1) und/oder die zweite elektronische Steuerung (ECU2) den wenigstens einen zweiten Druckmodulator (EPM2) abhängig von einem eine Soll-Verzögerung (zsoll) repräsentierenden Signal elektrisch steuert, welches von einem durch einen Fahrer des Fahrzeugs betätigbaren Bremswertgeber, einem Autopiloten, oder von einem Fahrerassistenzsystem erzeugt wird.

10. Bremsvorrichtung nach einem der vorhergehenden Ansprüche, **dadurch gekennzeichnet, dass**
a) der erste Druckmodulator (EPM1) als ein- oder mehrkanaliges Druckregelmodul ausgebildet ist, welches den ersten Bremsdruck (p11, p12) auf einen ersten Soll-Bremsdruck regelt, der abhängig von der Soll-Verzögerung (zsoll) ist, und/oder dass
b) der zweite Druckmodulator (EPM2) als ein- oder mehrkanaliges Druckregelmodul ausgebildet ist, welches den zweiten Bremsdruck (p21, p22) auf einen zweiten Soll-Bremsdruck regelt, der abhängig von der Soll-Verzögerung (zsoll) ist.

11. Bremsvorrichtung nach einem der vorhergehenden Ansprüche, **dadurch gekennzeichnet, dass**
a) die erste elektronische Steuerung (ECU1) in den ersten Druckmodulator (EPM1) und/oder
b) die zweite elektronische Steuerung (ECU2) in den zweiten Druckmodulator (EPM2) integriert ist.

12. Bremsvorrichtung nach einem der vorhergehenden Ansprüche, **dadurch gekennzeichnet, dass** wenigstens einige Komponenten des ersten Bremskreises von einer ersten elektrischen Energiequelle (Power1) und wenigstens einige Komponenten des zweiten Bremskreises von einer zweiten, von der ersten elektrischen Energiequelle (Power1) unabhängigen elektrischen Energiequelle (Power2) mit elektrischer Energie versorgt ist.

13. Bremsvorrichtung nach einem der vorhergehenden Ansprüche, **dadurch gekennzeichnet, dass** zwischen der ersten elektronischen Steuerung (ECU 1) und der zweiten elektronischen Steuerung (ECU2) eine Kommunikationseinrichtung (8) vorgesehen ist, welche eingerichtet und ausgebildet ist, um Signale und Informationen zwischen der ersten elektronischen Steuerung (ECU 1) und der zweiten elektronischen Steuerung (ECU2) auszutauschen.

14. Bremsvorrichtung nach einem der vorhergehenden Ansprüche, **dadurch gekennzeichnet, dass**
a) der erste Steuerdruck (Stp1) von dem zweiten Bremsdruck (p21, p22) abgeleitet ist oder dem zweiten Bremsdruck (p21, p22) entspricht, und/oder dass
b) der zweite Steuerdruck (Stp2) von dem ersten Bremsdruck (p11, p12) abgeleitet ist oder dem ersten Bremsdruck (p11, p12) entspricht.

15. Bremsvorrichtung nach einem der vorhergehenden Ansprüche, **dadurch gekennzeichnet, dass**
a) zwischen wenigstens einem ersten Druckausgang (3) des ersten Druckmodulators (EPM1), an dem dieser den ersten Bremsdruck (p11, p12) in die erste Bremsleitung (2) aussteuert und einem zweiten Steuereingang (11) des zweiten Druckmodulators (EPM 2) eine erste Steuerleitung (10) gezogen ist, von welcher zumindest ein Abschnitt den ersten Steuerdruck (Stp1) führt, und/oder
b) zwischen wenigstens einem zweiten Druckausgang (5) des zweiten Druckmodulators (EPM 2), an dem dieser den zweiten Bremsdruck (p21, p22) in die zweite Bremsleitung (6) aussteuert und einem ersten Steuereingang (9) des ersten Druckmodulators (EPM 1) eine zweite Steuerleitung (12) gezogen ist, von welcher zumindest ein Abschnitt den zweiten Steuerdruck (Stp2) führt.

16. Bremsvorrichtung nach einem der vorhergehenden Ansprüche, **dadurch gekennzeichnet, dass**
a) der erste Druckmodulator (EPM1) wenigstens zwei erste Druckausgänge (3) aufweist, an denen dieser jeweils einen ersten Bremsdruck (p11, p12) in jeweils eine erste Bremsleitung (2) aussteuert, und ein Select-High-Ventil vorgesehen ist, welches den größeren der beiden ersten Bremsdrücke (p11 oder p12) an einen zweiten Steuereingang (11) des zweiten Druckmodulators (EPM 2) aussteuert, und/oder dass
b) der zweite Druckmodulator (EPM2) wenigstens zwei zweite Druckausgänge (5) aufweist, an denen dieser jeweils einen zweiten Bremsdruck (p21, p22) in jeweils eine zweite Bremsleitung (6) aussteuert, und ein Select-High-Ventil (SH) vorgesehen ist, welches den größeren der beiden zweiten Bremsdrücke (p21 oder p22) an einen ersten Steuereingang (9) des ersten Druckmodulators (EPM 1) aussteuert.

17. Bremsvorrichtung nach einem der vorhergehenden Ansprüche, **dadurch gekennzeichnet, dass** sie ein Anhängersteuermodul umfasst, welches
a) von der ersten elektronischen Steuerung (ECU1) oder von der zweiten elektronischen Steuerung (ECU2) elektrisch, und/oder
b) von dem ersten Bremsdruck (p11, p12) oder von dem zweiten Bremsdruck (p21, p22) gesteuert ist, und/oder
c) von dem ersten Steuerdruck (Stp1) und/oder dem zweiten Steuerdruck (Stp2) gesteuert ist.

18. Bremsvorrichtung nach einem der vorhergehenden Ansprüche, **dadurch gekennzeichnet, dass** sie eine elektro-pneumatische Betriebsbremsvorrichtung ist.

19. Fahrzeug mit einer Bremsvorrichtung nach einem der vorhergehenden Ansprüche, insbesondere Nutzfahrzeug.

20. Fahrzeug nach Anspruch 19, **dadurch gekennzeichnet, dass** es ein wenigstens teilautonom gesteuertes Fahrzeug ist.

## Claims

1. A pressure medium-actuated and at least partially electronic brake device (1) for a vehicle, in particular for a commercial vehicle, at least comprising:
a) a first brake circuit with a first electronic controller (ECU1), at least one first electro-pneumatic pressure modulator (EPM1) and at least one first brake actuator that brakes a first wheel, wherein the at least one first pressure modulator (EPM1) is primarily electrically controllable by the first electronic controller (ECU1) and secondarily controllable by a first control pressure (Stp1), in order to generate a first brake pressure (p11, p12) in at least a first brake line (2) for the at least one first brake actuator,
b) a second brake circuit with a second electronic controller (ECU2), at least one second pressure modulator (EPM2) and at least one second brake actuator that brakes a second wheel, wherein the at least one second pressure modulator (EPM2) is primarily electrically controllable by the second electronic controller (ECU2) and secondarily controllable by a second control pressure (Stp2), in order to generate a second brake pressure (p21, p22) in at least one second brake line (6) for the at least one second brake actuator of a second wheel,
c) at least one first pressure control valve (PCV1) in the first brake line (2), which is designed to modulate the first brake pressure (p11, p12) depending on a first electrical signal (S1, S1*), **characterized by**
d) at least one second pressure control valve (PCV2) in the second brake line (6), which is designed to modulate the second brake pressure (p21, p22) depending on a second electrical signal (S2, S2*), wherein
e) the first control pressure (Stp1) is at least correlated with the second brake pressure (p21, p22), and/or wherein
f) the second control pressure (Stp2) is at least correlated with the first brake pressure (p11, p12), and wherein
g) the first electrical signal (S1, S1*) and/or the second electrical signal (S2, S2*) is generated by at least one function implemented in at least one electronic controller (ECU1, ECU2).

2. The brake device as claimed in claim 1, **characterized in that** the function is designed and set up to control or regulate the first brake pressure (p11, p12) and/or the second brake pressure (p21, p22).

3. The brake device as claimed in any one of the preceding claims, **characterized in that** the function comprises an axle-load-dependent brake pressure controller, an anti-lock braking system (ABS), an anti-slip regulation system (ASR), processing or implementation of a signal representing a target deceleration (zsoll) and/or an electronic stability program (ESP) and/or a driver assistance function.

4. The brake device as claimed in any one of the preceding claims, **characterized in that** the function is implemented in the first electronic controller (ECU1) and/or in the second electronic controller (ECU2) or in a third controller.

5. The brake device as claimed in any one of the preceding claims, **characterized in that**
a) at least one first wheel speed sensor (15) is provided and designed to detect a first wheel speed (n1) of the first wheel, and/or
b) at least one second wheel speed sensor (16) is provided and designed to detect a second wheel speed (n2) of the second wheel.

6. The brake device as claimed in claim 5, **characterized in that** the function is designed and set up such that it
a) generates the first electrical signal (S1, S1*) depending on the detected first wheel speed (n1) and/or depending on the detected second wheel speed (n2), and/or
b) the second electrical signal (S2, S2*) is generated depending on the detected first wheel speed (n1) and/or depending on the detected second wheel speed (n2).

7. The brake device as claimed in claim 5 or 6, **characterized in that**
a) the at least one first wheel speed sensor (15) generates a first wheel speed signal (Sn1) depending on the first wheel speed (n1) and feeds it into the second electronic controller (ECU2), and/or **in that**
b) the at least one second wheel speed sensor (16) generates a second wheel speed signal (Sn2) depending on the second wheel speed (n2) and feeds it into the first electronic controller (ECU1).

8. The brake device as claimed in claim 7, **characterized in that**
a) the second electronic controller (ECU2) generates the first signal (S1, S1*) depending on the first wheel speed signal (Sn1), and/or **in that**
b) the first electronic controller (ECU1) generates the second signal (S2, S2*) depending on the second wheel speed signal (Sn2).

9. The brake device as claimed in any one of the preceding claims, **characterized in that** the first electronic controller (ECU1) electrically controls the at least one first pressure modulator (EPM1), and/or the second electronic controller (ECU2) electrically controls the at least one second pressure modulator (EPM2) depending on a signal representing a target deceleration (zsoll), which is generated by a brake sensor operated by a driver of the vehicle, an autopilot, or a driver assistance system.

10. The brake device as claimed in any one of the preceding claims, **characterized in that**
a) the first pressure modulator (EPM1) is in the form of a single-channel or multi-channel pressure control module, which regulates the first brake pressure (p11, p12) to a first target brake pressure that depends on the target deceleration (zsoll), and/or **in that**
b) the second pressure modulator (EPM2) is in the form of a single-channel or multi-channel pressure control module, which regulates the second brake pressure (p21, p22) to a second target brake pressure that depends on the target deceleration (zsoll).

11. The brake device as claimed in any one of the preceding claims, **characterized in that**
a) the first electronic controller (ECU1) is integrated into the first pressure modulator (EPM1) and/or
b) the second electronic controller (ECU2) is integrated into the second pressure modulator (EPM2).

12. The brake device as claimed in any one of the preceding claims, **characterized in that** at least some components of the first brake circuit are supplied with electrical power by a first electrical power source (Power1), and at least some components of the second brake circuit are supplied with electrical power by a second electrical power source (Power2) that is independent of the first electrical power source (Power1).

13. The brake device as claimed in any one of the preceding claims, **characterized in that** between the first electronic controller (ECU 1) and the second electronic controller (ECU2) a communication apparatus (8) is provided, which is set up and is designed to exchange signals and information between the first electronic controller (ECU 1) and the second electronic controller (ECU2).

14. The brake device as claimed in any one of the preceding claims, **characterized in that**
a) the first control pressure (Stp1) is derived from the second brake pressure (p21, p22) or corresponds to the second brake pressure (p21, p22), and/or **in that**
b) the second control pressure (Stp2) is derived from the first brake pressure (p11, p12) or corresponds to the first brake pressure (p11, p12).

15. The brake device as claimed in any one of the preceding claims, **characterized in that**
a) between at least one first pressure output (3) of the first pressure modulator (EPM1), at which it modulates the first brake pressure (p11, p12) into the first brake line (2), and a second control input (11) of the second pressure modulator (EPM 2), a first control line (10) is routed, at least a portion of which carries the first control pressure (Stp1), and/or
b) between at least one second pressure output (5) of the second pressure modulator (EPM 2), at which it modulates the second brake pressure (p21, p22) into the second brake line (6), and a first control input (9) of the first pressure modulator (EPM 1), a second control line (12) is routed, at least a portion of which carries the second control pressure (Stp2).

16. The brake device as claimed in any one of the preceding claims, **characterized in that**
a) the first pressure modulator (EPM1) has at least two first pressure outputs (3,) at each of which it modulates a first brake pressure (p11, p12) into a respective first brake line (2), and a select-high valve is provided which modulates the higher of the first two brake pressures (p11 or p12) into a second control input (11) of the second pressure modulator (EPM 2), and/or **in that**
b) the second pressure modulator (EPM2) has at least two second pressure outputs (5), at each of which it modulates a second brake pressure (p21, p22) into a respective second brake line (6), and a select-high valve (SH) is provided which modulates the higher of the two second brake pressures (p21 or p22) into a first control input (9) of the first pressure modulator (EPM 1).

17. The brake device as claimed in any one of the preceding claims, **characterized in that** it comprises a trailer control module, which
a) is electrically controlled by the first electronic controller (ECU1) or by the second electronic controller (ECU2), and/or
b) is controlled by the first brake pressure (p11, p12) or by the second brake pressure (p21, p22), and/or
c) is controlled by the first control pressure (Stp1) and/or the second control pressure (Stp2).

18. The brake device as claimed in any one of the preceding claims, **characterized in that** it is an electro-pneumatic service brake device.

19. A vehicle with a brake device as claimed in any one of the preceding claims, in particular a commercial vehicle.

20. The vehicle as claimed in claim 19, **characterized in that** it is an at least a semi-autonomously controlled vehicle.

## Revendications

1. Dispositif de freinage (1) actionné par un fluide sous pression et au moins partiellement électronique pour un véhicule, en particulier pour un véhicule utilitaire, comprenant au moins :
a) un premier circuit de freinage avec une première commande électronique (ECU1), au moins un premier modulateur de pression électro-pneumatique (EPM1) et au moins un premier actionneur de frein qui freine une première roue, dans lequel l'au moins un premier modulateur de pression (EPM1) peut être commandé électriquement de manière primaire par la première commande électronique (ECU1) et de manière secondaire par une première pression de commande (Stp1) afin de générer une première pression de freinage (p11, p12) pour l'au moins un premier actionneur de frein dans au moins une première conduite de frein (2),
b) un second circuit de freinage avec une seconde commande électronique (ECU2), au moins un second modulateur de pression (EPM2) et au moins un second actionneur de frein qui freine une seconde roue, dans lequel l'au moins un second modulateur de pression (EPM2) peut être commandé électriquement de manière primaire par la seconde commande électronique (ECU2) et de manière secondaire par une seconde pression de commande (Stp2) afin de générer une seconde pression de freinage (p21, p22) pour l'au moins un second actionneur de frein d'une seconde roue dans au moins une seconde conduite de frein (6),
c) au moins une première soupape de régulation de pression (PCV1) dans la première conduite de frein (2) qui est configurée afin de moduler la première pression de freinage (p11, p12) en fonction d'un premier signal électrique (S1, S1*), **caractérisé par**
c) au moins une seconde soupape de régulation de pression (PCV2) dans la seconde conduite de frein (6) qui est configurée afin de moduler la seconde pression de freinage (p21, p22) en fonction d'un second signal électrique (S2, S2*), dans lequel
e) la première pression de commande (Stp1) est corrélée au moins avec la seconde pression de freinage (p21, p22) et/ou, dans lequel
f) la seconde pression de commande (Stp2) est corrélée au moins avec la première pression de freinage (p11, p12) et, dans lequel
g) le premier signal électrique (S1, S1*) et/ou le second signal électrique (S2, 52*) est généré par au moins une fonction implémentée dans au moins une commande électronique (ECU1, ECU2).

2. Dispositif de freinage selon la revendication 1, **caractérisé en ce que** la fonction est configurée et conçue afin de commander ou réguler la première pression de freinage (p11, p12) et/ou la seconde pression de freinage (p21, p22).

3. Dispositif de freinage selon l'une quelconque des revendications précédentes, **caractérisé en ce que** la fonction comprend une commande de pression de freinage dépendant de la charge d'essieu, une fonction antiblocage (ABS), une régulation antipatinage (ASR), un traitement ou une conversion d'un signal représentant un ralentissement de consigne (zsoll) et/ou un contrôle dynamique de la trajectoire (ESP) et/ou une fonction d'aide à la conduite.

4. Dispositif de freinage selon l'une quelconque des revendications précédentes, **caractérisé en ce que** la fonction est implémentée dans la première commande électronique (ECU1) et/ou dans la deuxième commande électronique (ECU2) ou dans une troisième commande.

5. Dispositif de freinage selon l'une quelconque des revendications précédentes, **caractérisé en ce que**
a) au moins un premier capteur de vitesse de rotation de roue (15) est prévu et configuré afin de détecter une première vitesse de rotation de roue (n1) de la première roue et/ou
b) au moins un second capteur de vitesse de rotation de roue (16) est prévu et configuré afin de détecter une seconde vitesse de rotation de roue (n2) de la seconde roue.

6. Dispositif de freinage selon la revendication 5, **caractérisé en ce que** la fonction est configuré et conçue afin qu'elle
a) génère le premier signal électrique (S1, S1*) en fonction de la première vitesse de rotation de roue (n1) détectée et/ou en fonction de la seconde vitesse de rotation de roue (n2) détectée et/ou
b) génère le second signal électrique (S2, S2*) en fonction de la première vitesse de rotation de roue (n1) détectée et/ou en fonction de la seconde vitesse de rotation de roue (n2) détectée.

7. Dispositif de freinage selon la revendication 5 ou 6, **caractérisé en ce que**
a) l'au moins un premier capteur de vitesse de rotation de roue (15) génère un premier signal de vitesse de rotation de roue (Sn1) en fonction de la première vitesse de rotation de roue (n1) et l'injecte dans la seconde commande électronique (ECU2) et/ou **en ce que**
b) l'au moins un second capteur de vitesse de rotation de roue (16) génère un second signal de vitesse de rotation de roue (Sn2) en fonction de la seconde vitesse de rotation de roue (n2) et l'injecte dans la première commande électronique (ECU1).

8. Dispositif de freinage selon la revendication 7, **caractérisé en ce que**
a) la seconde commande électronique (ECU2) génère le premier signal (S1, S1 *) en fonction du premier signal de vitesse de rotation de roue (Sn1) et/ou **en ce que**
b) la première commande électronique (ECU1) génère le second signal (S2, S2 *) en fonction du second signal de vitesse de rotation de roue (Sn2).

9. Dispositif de freinage selon l'une quelconque des revendications précédentes, **caractérisé en ce que** la première commande électronique (ECU1) commande électriquement l'au moins un premier modulateur de pression (EPM1) et/ou la seconde commande électronique (ECU2) commande l'au moins un second modulateur de pression (EPM2) en fonction d'un signal représentant un ralentissement de consigne (zsoll) qui est généré par un générateur de valeur de freinage actionnable par un conducteur du véhicule, par un pilote automatique ou par un système d'aide à la conduite.

10. Dispositif de freinage selon l'une quelconque des revendications précédentes, **caractérisé en ce que**
a) le premier modulateur de pression (EPM1) est configuré comme un module de régulation de pression à un ou plusieurs canaux qui régule la première pression de freinage (p11, p12) à une première pression de freinage de consigne qui dépend du ralentissement de consigne (zsoll) et/ou **en ce que**
b) le second modulateur de pression (EPM2) est configuré comme un module de régulation de pression à un ou plusieurs canaux qui régule la seconde pression de freinage (p21, p22) à une seconde pression de freinage de consigne qui dépend du ralentissement de consigne (zsoll).

11. Dispositif de freinage selon l'une quelconque des revendications précédentes, **caractérisé en ce que**
a) la première commande électronique (ECU1) est intégrée dans le premier modulateur de pression (EPM1) et/ou
b) la seconde commande électronique (ECU2) est intégrée dans le second modulateur de pression (EPM2).

12. Dispositif de freinage selon l'une quelconque des revendications précédentes, **caractérisé en ce qu'**au moins certains composants du premier circuit de freinage sont alimentés en énergie électrique par une première source d'énergie électrique (Power1) et au moins certains composants du second circuit de freinage par une seconde source d'énergie électrique (Power2) indépendante de la première source d'énergie électrique (Power1).

13. Dispositif de freinage selon l'une quelconque des revendications précédentes, **caractérisé en ce qu'**un dispositif de communication (8) est prévu entre la première commande électronique (ECU1) et la seconde commande électronique (ECU2) qui est conçu et configuré afin d'échanger des signaux et des informations entre la première commande électronique (ECU1) et la seconde commande électronique (ECU2).

14. Dispositif de freinage selon l'une quelconque des revendications précédentes, **caractérisé en ce que**
a) la première pression de commande (Stp1) est dérivée de la seconde pression de freinage (p21, p22) ou correspond à la seconde pression de freinage (p21, p22) et/ou **en ce que**
b) la seconde pression de commande (Stp2) est dérivée de la première pression de freinage (p11, p12) ou correspond à la première pression de freinage (p11, p12).

15. Dispositif de freinage selon l'une quelconque des revendications précédentes, **caractérisé en ce que**
a) une première conduite de commande (10) est tirée entre au moins une première sortie de pression (3) du premier modulateur de pression (EPM1), au niveau de laquelle celui-ci règle la première pression de freinage (p11, p12) dans la première conduite de frein (2) et une seconde entrée de commande (11) du second modulateur de pression (EPM 2), conduite de commande depuis laquelle au moins une section gère la première pression de commande (Stp1) et/ou
b) une seconde conduite de commande (12) est tirée entre au moins une seconde sortie de pression (5) du second modulateur de pression (EPM 2), au niveau de laquelle celui-ci règle la seconde pression de freinage (p21, p22) dans la seconde conduite de frein (6) et une première entrée de commande (9) du premier modulateur de pression (EPM 1), conduite de commande depuis laquelle au moins une conduite de commande gère la seconde pression de commande (Stp2).

16. Dispositif de freinage selon l'une quelconque des revendications précédentes, **caractérisé en ce que**
a) le premier modulateur de pression (EPM1) présente au moins deux premières sorties de pression (3), au niveau desquelles celui-ci règle respectivement une première pression de freinage (p11, p12) dans respectivement une première conduite de frein (2), et une soupape à haute sélectivité est prévue, laquelle règle la plus grande des deux premières pressions de freinage (p11 oder p12) au niveau d'une seconde entrée de commande (11) du second modulateur de pression (EPM 2) et/ou **en ce que**
b) le second modulateur de pression (EPM2) présente au moins deux secondes sorties de pression (5), au niveau desquelles celui-ci règle respectivement une seconde pression de freinage (p21, p22) dans respectivement une seconde conduite de frein (6), et une soupape à haute sélectivité est prévue, laquelle règle la plus grande des deux secondes pressions de freinage (p21 oder p22) au niveau d'une première entrée de commande (9) du premier modulateur de pression (EPM 1).

17. Dispositif de freinage selon l'une quelconque des revendications précédentes, **caractérisé en ce qu'**il comprend un module de commande de remorque qui
a) est commandé électriquement par la première commande électronique (ECU1) ou par la seconde commande électronique (ECU2) et/ou
b) par la première pression de freinage (p11, p12) ou par la seconde pression de freinage (p21, p22) et/ou
c) est commandé par la première pression de commande (Stp1) et/ou par la seconde pression de commande (Stp2).

18. Dispositif de freinage selon l'une quelconque des revendications précédentes, **caractérisé en ce qu'**il est un dispositif de freinage de service électropneumatique.

19. Véhicule avec au moins un dispositif de freinage selon l'une quelconque des revendications précédentes, en particulier un véhicule utilitaire.

20. Véhicule selon la revendication 19, **caractérisé en ce qu'**il est un véhicule commandé de manière au moins partiellement autonome.
